(19) Europäisches Patentamt
European Patent Office
Office européen des brevets

(11) **EP 4 379 610 A1**

(12) **EUROPEAN PATENT APPLICATION**

(43) Date of publication:
**05.06.2024 Bulletin 2024/23**

(21) Application number: **23212470.1**

(22) Date of filing: **27.11.2023**

(51) International Patent Classification (IPC):
**G06N 3/098** (2023.01)

(52) Cooperative Patent Classification (CPC):
**G06N 3/098**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2022 JP 2022190207**

(71) Applicant: **Ricoh Company, Ltd.**
**Tokyo 143-8555 (JP)**

(72) Inventor: **Aizaki, Tomoyasu**
**Tokyo, 143-8555 (JP)**

(74) Representative: **Marks & Clerk LLP**
**15 Fetter Lane**
**London EC4A 1BW (GB)**

(54) **INFORMATION PROCESSING APPARATUS, NODE, INFORMATION PROCESSING METHOD, CARRIER MEANS, AND INFORMATION PROCESSING SYSTEM**

(57) An information processing apparatus, a node, an information processing method, a carrier means, and an information processing system. The information processing apparatus receives information indicating a local model or output data, from each of a plurality of nodes, the information indicating the local model being obtained by learning a local data processed by the node based on a global model, the output data being obtained by inputting shared data to the local model, updates the global model based on a plurality of the information indicating the local model or a plurality of the output data received from the plurality of nodes, and calculates a contribution degree of each of the plurality of local models or each of the plurality of output data to the updated global model.

FIG. 1

EP 4 379 610 A1

## Description

BACKGROUND

Technical Field

The present disclosure relates to an information processing apparatus, a node, an information processing method, a carrier means, and an information processing system.

Related Art

WO2019-146358 describes a learning system including a reception unit to receive input of first learning data from a user, a calculation unit to calculate contribution degree of the first learning data to learning of the classifier for each user based on at least one of a comparison result between the first learning data and second learning data used to create the classifier, and a comparison result of output obtained by inputting the first learning data to the classifier and correct data corresponding to the first learning data, and a service setting unit for setting a service for the user based on the contribution degree calculated for each user.

SUMMARY

Embodiments of the present disclosure describe the information processing apparatus, a node, an information processing method, a carrier means, and an information processing system.

According to one embodiment, the information processing apparatus receives information indicating a local model or output data, from each of a plurality of nodes, the information indicating the local model being obtained by learning a local data processed by the node based on a global model, the output data being obtained by inputting shared data to the local model, updates the global model based on a plurality of the information indicating the local model or a plurality of the output data received from the plurality of nodes, and calculates a contribution degree of each of the plurality of local models or each of the plurality of output data to the updated global model.

According to one embodiment, the information processing apparatus includes a receiving unit to receive information indicating a local model or output data, from each of a plurality of nodes, the information indicating the local model being obtained by learning a local data processed by the node based on a global model, the output data being obtained by inputting shared data to the local model, an update unit to update the global model based on a plurality of the information indicating the local model or a plurality of the output data received from the plurality of nodes, and an evaluation unit to evaluate the updated global model based on evaluation data.

According to one embodiment, the node includes a learning processing unit to obtain a local model, the local model being obtained by learning a local data based on a global model, and an evaluation unit to evaluate the global model based on the local data, the global model being updated based on the local models of a plurality of nodes or being updated based on output data of the plurality of nodes each obtained by inputting shared data to the local model.

According to one embodiment, the information processing method includes transmitting information indicating a global model to a plurality of nodes, receiving from each of the plurality of nodes, information indicating a local model or output data, the local model being obtained by learning a local data processed by the node based on the global model, the output data being obtained by inputting shared data to the local model, updating the global model based on a plurality of the information indicating the local model or a plurality of the output data received from the plurality of nodes, and calculating a contribution degree of each of the plurality of local models or each of the plurality of output data to the updated global model.

According to one embodiment, the information processing method includes receiving from each of a plurality of nodes, information indicating a local model or output data, the information indicating the local model being obtained by learning a local data processed by the node based on a global model, the output data being obtained by inputting shared data to the local model, updating the global model based on a plurality of the information indicating the local model or a plurality of the output data received from the plurality of nodes, and evaluating the updated global model based on evaluation data.

According to one embodiment, the information processing method includes obtaining a local model learned, the local model being obtained by learning a local data based on a global model, and evaluating the global model based on the local data, the global model being updated based on the local models of a plurality of nodes or being updated based on output data of the plurality of nodes each obtained by inputting shared data to the local model.

According to one embodiment, the information processing system includes the information processing apparatus and a plurality of nodes communicably connected with the information processing apparatus, each of the plurality of nodes including a transmission unit to transmit to the information processing apparatus the information indicating the local model or the output data.

According to one embodiment, the information processing system includes the information processing apparatus and a plurality of nodes communicably connected with the information processing apparatus, each of the plurality of nodes including a transmission unit to transmit to the information processing apparatus the information indicating the local model or the output data.

According to one embodiment, the information processing system includes an information processing apparatus and a plurality of nodes communicably connected with the information processing apparatus, each of the plurality of nodes including a learning processing unit to obtain a local model, the local model being obtained by learning a local data based on a global model, and a transmission unit to transmit to the information processing apparatus, information indicating the local model or output data obtained by inputting shared data to the local model, and the information processing apparatus including a receiving unit to receive the information indicating the local model or the output data from each of the plurality of nodes, an update unit to update the global model based on a plurality of the information indicating the local model or a plurality of the output data received from the plurality of nodes, and a transmission unit to transmit an updated global model to the plurality of nodes, and each of the plurality of nodes further including a receiving to receive the updated global model from the information processing apparatus, and an evaluation unit to evaluate the updated global model based on the local data.

According to the present disclosure, a practical use of learning model is promoted.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a diagram illustrating an overall configuration of an information processing system according to embodiments of the present disclosure;

FIG. 2 is a block diagram illustrating a hardware configuration of a communication device and a server according to the embodiments of the present disclosure;

FIG. 3 is a block diagram illustrating a functional configuration of the information processing system according to the embodiments of the present disclosure;

FIG. 4 is a sequence diagram illustrating a first example of a process according to the embodiments of the present disclosure;

FIG. 5 is a flowchart illustrating a process executed by the server according to a first example;

FIG. 6 is a flowchart illustrating a process executed by the communication device according to the first example;

FIG. 7 is a first sequence diagram illustrating a second example of the process according to the embodiments of the present disclosure;

FIG. 8 is a second sequence diagram illustrating the second example of the process according to the embodiments of the present disclosure;

FIG. 9 is a flowchart illustrating an overall process executed by the server according to the second example;

FIG. 10 is a flowchart illustrating details of the process executed by the server according to the second example;

FIG. 11 is a first sequence diagram illustrating a third example of the process according to the embodiments of the present disclosure;

FIG. 12 is a second sequence diagram illustrating the third example of the process according to the embodiments of the present disclosure;

FIG. 13 is a flowchart illustrating a process executed by the server according to the third example;

FIG. 14 is a flowchart illustrating a process executed by the communication device according to the third example;

FIG. 15 is a sequence diagram illustrating a fourth example of the process according to the embodiments of the present disclosure;

FIG. 16 is a flowchart illustrating a process executed by the server according to the fourth example illustrated in FIG. 15;

FIG. 17 is a flowchart illustrating a process executed by the communication device according to the fourth example;

FIG. 18 is a first sequence diagram illustrating a fifth example of the process according to the embodiments of the present disclosure;

FIG. 19 is a second sequence diagram illustrating the fifth example of the process according to the embodiments of the present disclosure;

FIG. 20 is a first sequence diagram illustrating a sixth example of the process according to the embodiments of the present disclosure; and

FIG. 21 is a second sequence diagram illustrating the sixth example of the process according to the embodiments of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Federated learning is a machine learning method that performs learning without aggregating data, while keeping the data in a distributed state. The federated learning enables construction of models that utilize data from multiple clients, as if data were linked, while ensuring privacy and security.

In the federated learning of the related art, benefit for clients participating in the federated learning is an availability of highly accurate models built through the federated learning. An inconvenience of the federated learning is that the benefit to the client would be the same whether or not a client made a significant contribution degree to increasing accuracy of the federated learning models.

One object of the present embodiment is to provide incentives to clients according to contribution degree to a federated learning model while ensuring privacy and security.

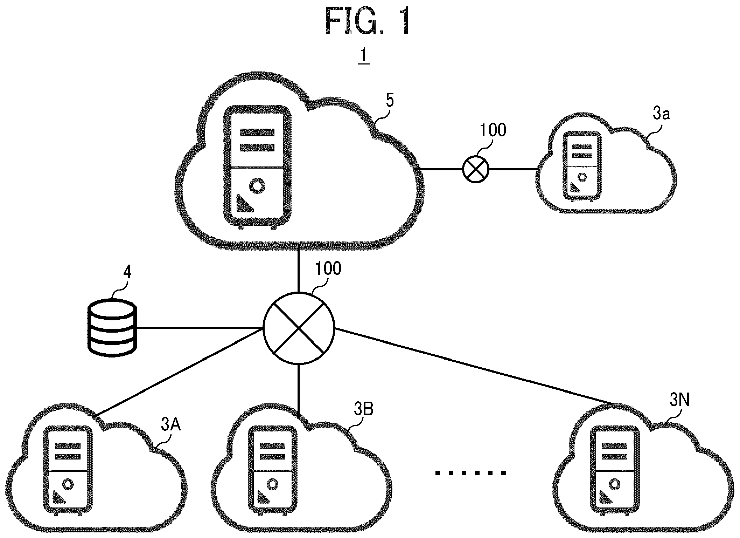

FIG. 1 is a schematic diagram illustrating an overview of an information processing system 1, according to an embodiment of the present disclosure. The information processing system 1 of the present embodiment includes a plurality of communication devices 3A, 3B to 3N, 3a, an external storage 4, and a server 5.

The server 5 is an example of an information processing apparatus that manages a global model used for the federated learning. Since the global model is also a learning model managed by the server 5, that is a central server, the global model may be referred to as a central model.

The plurality of communication devices 3A, 3B to 3N are examples of nodes used by clients participating in the federated learning. The communication device 3a is an example of a node used by a client that does not participate in the federated learning but receives a learned global model from the server 5. The plurality of communication devices 3A, 3B to 3N are described as the communication device 3 unless the communication devices 3A, 3B to 3N are to be distinguished.

The external storage 4 stores and manages shared data used by the server 5 and the plurality of communication devices 3A, 3B to 3N.

The plurality of communication devices 3A, 3B to 3N, 3a, the external storage 4, and the server 5 communicate through a communication network 100. The communication network 100 includes the internet, a mobile communication network, a local area network (LAN), and the like. The communication network 100 may include, in addition to a wired network, a wireless network in compliance with 3rd Generation (3G), Worldwide Interoperability for Microwave Access (WiMAX), Long Term Evolution (LTE), and the like.

Further, the information processing system 1 may implement all or part of the plurality of communication devices 3A, 3B to 3N, 3a, the external storage 4, and the server 5 by cloud computing. In this case, the plurality of communication devices 3A, 3B to 3N, 3a, the external storage 4, and the server 5 communicate with each other at high speed without going through the communication network 100.

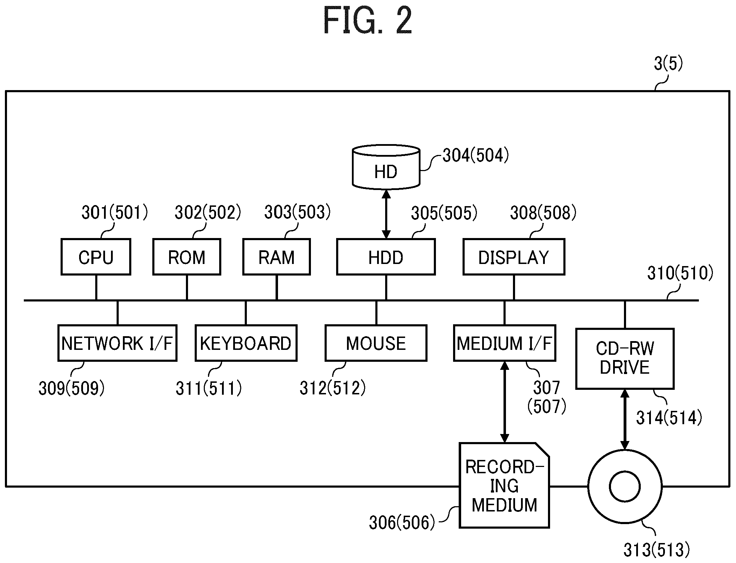

FIG. 2 is a block diagram illustrating a hardware configuration of a communication device and a server according to the embodiment of the present disclosure. Each hardware configuration of the communication device 3 is indicated by a code in the 300 series. Each hardware configuration of the server 5 is indicated by a code in the 500 series in parentheses.

The communication device 3 includes a central processing unit (CPU) 301, a read only memory (ROM) 302, a random access memory (RAM) 303, a hard disk (HD) 304, a hard disk drive (HDD) 305, a recording medium 306, a medium interface (I/F) 307, display 308, network I/F 309, a keyboard 311, a mouse 312, a compact disc-rewritable (CD-RW) drive 314, and a bus line 310.

Among these components, the CPU 301 controls entire operation of the communication device 3. The ROM 302 stores programs used to drive the CPU 301. The RAM 303 is used as a work area for the CPU 301. The HD 304 stores various data such as a program. The HDD 305 controls reading and writing of various data from and to the HD 304 under control of the CPU 301. The medium I/F 307 controls reading or writing (storage) of data from or to the recording medium 306 such as a flash memory. The display 308 displays various information such as a cursor, menu, window, character, or image. The network I/F 309 is an interface that controls communication of data through the communication network 100. The keyboard 311 is an example of an input device provided with a plurality of keys for allowing the user to input characters, numerals, or various instructions. The mouse 312 is an example of the input device that allows the user to select a particular instruction or execution, select a target for processing, or move the cursor being displayed. The CD-RW drive 314 reads and writes various data from and to a CD-RW 313, which is an example of a removable storage medium. The communication device 3 may further include a configuration that controls reading or writing (storage) of data to an external PC or external device connected by wire or wirelessly such as Wi-Fi.

The server 5 includes a CPU 501, a ROM 502, a RAM 503, an HD 504, an HDD 505, a recording medium 506, a medium I/F 507, a display 508, a network I/F 509, a keyboard 511, a mouse 512, a CD-RW drive 514, and a bus line 510. Since these hardware elements are the same or substantially the same as the above-mentioned elements (CPU 301, ROM 302, RAM 303, HD 304, HDD 305, recording medium 306, medium I/F 307, display 308, network I/F 309, keyboard 311, mouse 312, CD-RW drive 314, and bus line 310), a description thereof is omitted.

The CD-RW drive 314 (514) may be a compact disc-recordable (CD-R) drive or the like. Further, the communication device 3 and the server 5 may be implemented by a single computer, or may be implemented by a plurality of computers in which each portion (function, means, or storage) is divided and arbitrarily assigned.

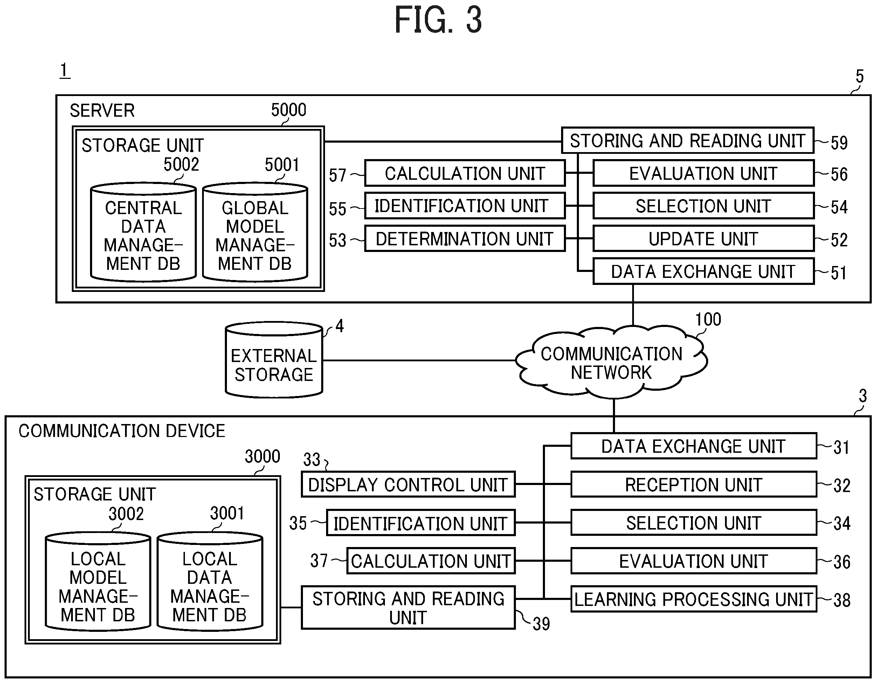

FIG. 3 is a block diagram illustrating a functional configuration of the information processing system according to the present embodiment.

As illustrated in FIG. 3, the communication device 3 includes a data exchange unit 31, a reception unit 32, a display control unit 33, a selection unit 34, an identification unit 35, an evaluation unit 36, a calculation unit 37, a learning processing unit 38, and a storing and reading unit 39. These units are functions implemented by or caused to function by operating any of the hardware elements illustrated in FIG. 2 in cooperation with the instructions of the CPU 301 according to the control program expanded from the HD 304 to the RAM 303. The communication device 3 further includes a storage unit 3000, which is implemented by the RAM 303 and the HD 304 illustrated in FIG. 2. The storage unit 3000 is an example of a storage unit.

Each component of the communication device 3 is described below.

The data exchange unit 31 is an example of a receiving unit, and is implemented by instructions of the CPU 301 and the network I/F 309 illustrated in FIG. 2, transmits and receives various data (or information) to and from other terminal, apparatus, and system through the communication network 100.

The reception unit 32 is an example of a reception unit, and is implemented by instructions from the CPU 301 illustrated in FIG. 2, as well as the keyboard 311 and the mouse 312, and receives various inputs from the user.

The display control unit 33 is an example of a display control unit, and is implemented by instructions from the CPU 301 illustrated in FIG. 2, and displays various images and screens on the display 308, which is an example of a display unit.

The selection unit 34, which is implemented by instructions of the CPU 301 illustrated in FIG. 2, executes processing such as selecting data. The selection unit 34 is an example of a selection unit.

The identification unit 35 is implemented by instructions from the CPU 301 illustrated in FIG. 2, and executes various identification processes. The identification unit 35 is an example of an identification unit.

The evaluation unit 36 is implemented by instructions from the CPU 301 illustrated in FIG. 2, and executes processing such as evaluating a global model, which is described below. The evaluation unit 36 is an example of an evaluation unit.

The calculation unit 37 is implemented by instructions from the CPU 301 illustrated in FIG. 2, and executes processing such as calculating the number of data. The calculation unit 37 is an example of a calculation unit.

The learning processing unit 38 is implemented by instructions from the CPU 301 illustrated in FIG. 2, and executes learning processing. The learning processing unit 38 is an example of a learning processing unit.

The storing and reading unit 39 is an example of storage control unit, and is implemented by instructions from the CPU 301 illustrated in FIG. 2, the HDD 305, medium I/F 307, CD-RW drive 314, and external PC and external devices, and stores various data in the storage unit 3000, the recording medium 306, the CD-RW 313, and the external PC or the external device, and reads various data from the storage unit 3000, the recording medium 306, the CD-RW 313, and the external PC or the external device.

A local data management database (DB) 3001 and a local model management DB 3002 are implemented in the storage unit 3000.

The local data management DB 3001 stores and manages local data input when the learning processing unit 38 executes the learning process, and the local model management DB 3002 stores and manages local model obtained as a result of the learning processing unit 38 executing the learning process.

The server 5 includes a data exchange unit 51, an update unit 52, a determination unit 53, a selection unit 54, an identification unit 55, an evaluation unit 56, a calculation unit 57, and a storing and reading unit 59. These units are functions or means implemented by or caused to function by operating one or more hardware components illustrated in FIG. 2 in cooperation with instructions of the CPU 501 according to the program loaded from the HD 504 to the RAM 503. Further, the server 5 includes a storage unit 5000 implemented by the HD 504 illustrated in FIG. 2. The storage unit 5000 is an example of a storage unit.

Each component of the server 5 is described below. The server 5 may have a configuration in which each function is distributed and implemented among multiple computers. Further, although the server 5 is described as a server computer residing in a cloud environment, the server 5 may reside in an on-premises environment.

The data exchange unit 51 is an example of a transmission unit, is implemented by instructions of the CPU 501 and the network I/F 509 illustrated in FIG. 2, and transmits and receives various data (or information) to and from other terminal, apparatus, and system through the communication network 100.

The update unit 52 is implemented by instructions from the CPU 501 illustrated in FIG. 2, and executes processing such as updating a global model, which is described below. The update unit 52 is an example of an update unit.

The determination unit 53 is implemented by instructions from the CPU 501 illustrated in FIG. 2, and executes processing such as determining incentives, which is described below. The determination unit 53 is an example of a determination unit.

The selection unit 54 is implemented by instructions from the CPU 501 illustrated in FIG. 2, and executes processing such as selecting models, data, and communication terminals 3 that participate in the federated learning. The selection unit 54 is an example of a selection unit.

The identification unit 55 is implemented by instructions from the CPU 501 illustrated in FIG. 2, and executes various identification processes.

The evaluation unit 56 is implemented by instructions from the CPU 501 illustrated in FIG. 2, and executes processing such as evaluating the global model. The evaluation unit 56 is an example of an evaluation unit.

The calculation unit 57 is implemented by instructions from the CPU 501 illustrated in FIG. 2, and executes processing such as evaluating contribution degree. The calculation unit 57 is an example of a calculation unit.

The storing and reading unit 59 is an example of storage control unit implemented by the instructions from the CPU 501 illustrated in FIG. 2, as well as the HDD 505, the medium I/F 507, the CD-RW drive 514, the external PC, and the external devices, and executes processing such as storing various data in the storage unit 5000, the recording medium 506, the CD-RW 513, the external PC, or the external device, or reading various data from the storage unit 5000, the recording medium 506, the CD-RW 513, the external PC, or the external device. The storage unit 5000, the recording medium 506, the CD-RW 513, the external PC, and the external device are examples of storage units.

A global model management DB 5001 and a central data management DB 5002 are implemented in the storage unit 5000.

The global model management DB 5001 stores and manages global models to be distributed to the communication devices 3, and the central data management DB 5002 stores and manages central data including evaluation data for evaluating the global models.

All or part of the functional configuration of the communication device 3 and the server 5 described above may be configured by cloud computing. In this case, the data exchange unit 31 of the communication device 3 and the data exchange unit 51 of the server 5 communicate at high speed without going through the communication network 100.

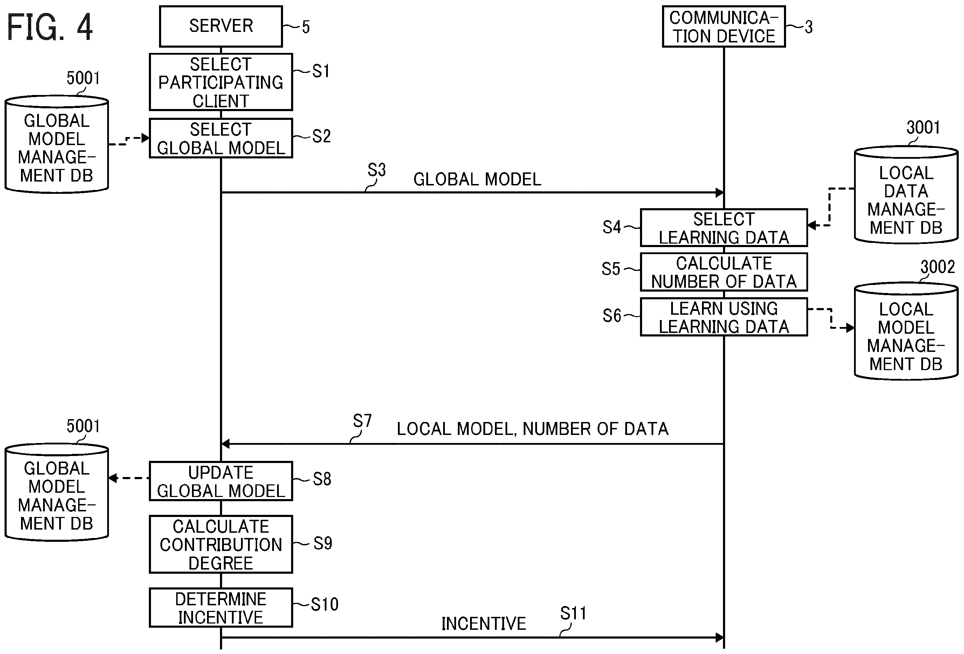

FIG. 4 is a sequence diagram illustrating a first example of a process according to the present embodiment.

In step S1, the selection unit 54 of the server 5 selects a communication device 3 of a client to participate in the federated learning. In step S2, the storing and reading unit 59 selects a global model to be distributed to each communication device 3 from the global models read from the global model management DB 5001. In the first example illustrated in FIG. 4, the selection unit 54 selects the same global model for all communication devices 3 participating in the federated learning.

In step S3, the data exchange unit 51 transmits the global model selected in step S2 to each communication device 3, and the data exchange unit 31 of each communication device 3 receives the global model transmitted from the server 5.

In step S4, the selection unit 34 selects learning data to be used in a learning process from the local data read from the local data management DB 3001 by the storing and reading unit 39. In step S5, the calculation unit 37 calculates the number of learning data selected in step S4.

In step S6, the learning processing unit 38 executes the learning process on the global model received in step S3 using the learning data selected in step S4, and in response to completion of the learning process, the storing and reading unit 59 stores the global model, which has undergone the learning process using the learning data, in the local model management DB 3002 as a local model.

In step S7, the data exchange unit 31 transmits the number of data calculated in step S5 and the local model obtained in step S6 to the server 5, and the data exchange unit 51 of the server 5 receives the number of data transmitted from each communication device 3 and the local model.

In step S8, the update unit 52 updates the global model selected in step S2, based on the number of data in each communication device 3 and the local model each received in step S7.

In step S9, the calculation unit 57 calculates the contribution degree of the local model of each communication device 3 to the global model updated in step S8 based on the number of data in each communication device 3 received in step S7, and in step S10, the determination unit 53 determines the incentive of the client of each communication device 3 based on the contribution degree of the local model of each communication device 3 calculated in step S9.

In step S11, the data exchange unit 51 transmits the incentive determined in step S10 to each communication device 3, and the data exchange unit 31 of each communication device 3 receives the incentive transmitted from the server 5.

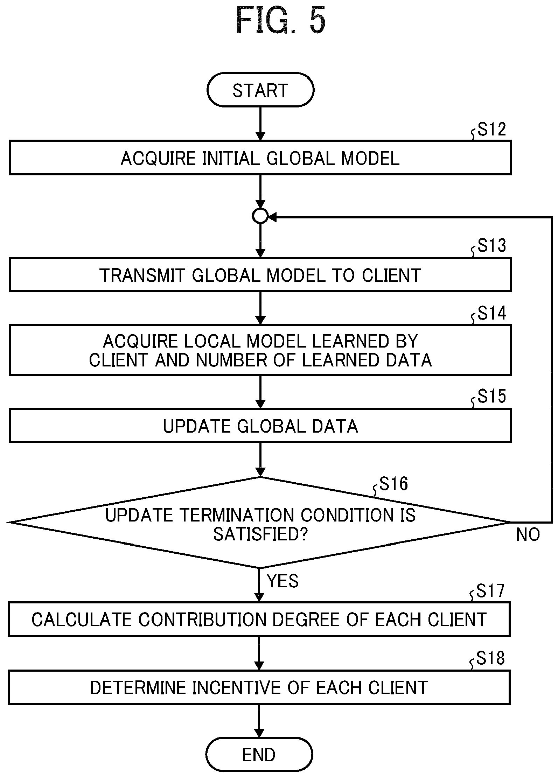

FIG. 5 is a flowchart illustrating a process executed by the server 5 according to the first example illustrated in FIG. 4.

In step S12, the selection unit 54 of the server 5 selects a global model to be distributed to each communication device 3 from the global models read from the global model management DB 5001 by the storing and reading unit 59. In the first example illustrated in FIG. 5, the selection unit 54 selects the same global model for all communication devices 3 participating in the federated learning.

The selection unit 54 may select a previously used global model, a global model based on a client model learned on a specific client, or a global model trained in advance on a general-purpose dataset.

In step S13, the data exchange unit 51 transmits the global model selected in step S12 to each communication device 3.

In step S14, the data exchange unit 51 receives the number of data and the local model transmitted from each communication device 3.

In step S15, the update unit 52 updates the global model selected in step S2, based on the number of data in each communication device 3 and the local model each received in step S14.

The update unit 52 updates the global model using known techniques such as FedAvg (1), FedProx (2), FedAvgM (3), and the like but the technique for update is not limited to the above as long as the global model is updated based on the local model.

An example of the FedAvg to be used is described in the below document (1).

> (1) Brendan McMahan, Eider Moore, Daniel Ramage, Seth Hampson, Blaise Aguera y Areas. "Communication-Efficient Learning of Deep Networks from Decentralized Data." Proceedings of the 20th International Conference on Artificial Intelligence and Statistics PMLR 54: 1273-1282, 2017.

An example of the FedProx to be used is described in the below document (2).

(2) Tian Li, Anit Kumar Sahu, Manzil Zaheer, Maziar Sanjabi, Ameet Talwalkar, Virginia Smith. "Federated Optimization in Heterogeneous Networks." In Proceedings of Machine Learning and Systems, Vol. 2, pp. 429-450, 2020.

An example of the FedAvgM to be used is described in the below document (3).

(3) Tzu-Ming Harry Hsu, Hang Qi, Matthew Brown. "Measuring the Effects of Non-Identical Data Distribution for Federated Visual Classification." arxiv preprint arxiv: 1909. 06335 (2019).

For example, in FedAvg (1), the update unit 52 updates the global model by averaging the weights of the local models of each communication device 3 by the number of data of each communication device 3.

In step S16, the identification unit 55 identifies whether an update termination condition is satisfied, and based on an identification result that the update termination condition is not satisfied, the process returns to step S13.

The identification unit 55 may identify whether the number of updates of the global model has reached a predetermined number of times as the update termination condition, or may identify that the update has progressed and no further improvement in accuracy is expected as the update termination condition.

The identification unit 55 may identify whether to stop updating based on "validation data for deciding whether to stop updating" prepared at the time of updating.

Based on the identification result that the update termination condition is satisfied in step S16, the calculation unit 57 calculates the number of data received in each communication device 3 in step S7, and in step S17, calculates the contribution degree of the client of each communication device 3 to the global model updated in step S8.

For example, the calculation unit 57 calculates the contribution degree of the client of each communication device 3 using the ratio of the number of learning data of each communication device 3 as indicated in the following equation.

Equation (1):

$$C_i = \frac{D_i}{\sum_{k=1}^{n} D_k}$$

In the equation (1), n represents the number of clients, Di represents the number of local data used for learning of the i-th client, and Ci represents the contribution degree of the i-th client. The contribution degree calculation method is not limited to the above method, and any method may be used as long as the contribution degree is calculated based on the number of learning data of each client.

In step S18, the determination unit 53 determines the incentive of the client of each communication device 3 based on the contribution degree calculated in step S17.

The incentive includes, for example, a discount on usage fee that occurs when each client uses the federated learning. The incentive includes benefits such as coupons, points, cash back, virtual currency, and increasing a particular level or rank.

Further, the target to whom the incentive is given may be a user associated with the client.

By providing incentives, clients may be motivated to participate in the federated learning to contribute to the learning of the federated learning model and to maintain the motivation of the clients. The incentive is not limited to the above, and any type of incentive may be used as long as the motivation to contribute to the learning of the federated learning model is caused and maintained.

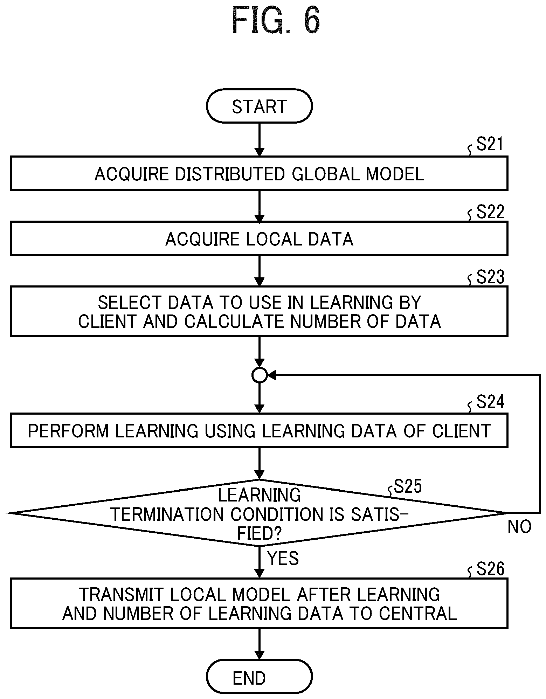

FIG. 6 is a flowchart illustrating a process executed by the communication device 3 according to the first example illustrated in FIG. 4.

In step S21, the data exchange unit 31 of the communication device 3 receives and acquires the global model transmitted and distributed from the server 5.

In step S22, the storing and reading unit 39 reads and acquires local data from the local data management DB 3001.

In step S23, the selection unit 34 selects learning data to be used in the learning process from the local data acquired in step S22, and the calculation unit 37 calculates the number of selected learning data.

In step S24, the learning processing unit 38 executes the learning process on the global model received in step S21 using the learning data selected in step S5.

In step S25, the identification unit 35 identifies whether a learning termination condition is satisfied, and based on an identification result that the learning termination condition is not satisfied, the process returns to step S24.

The identification unit 35 may use the number of epochs or Early Stopping as the learning termination condition.

The number of epochs is the number of times that one training data is repeated for learning. Early Stopping is a method of "stopping learning when learning progresses and no further improvement in accuracy can be expected, and in Early Stopping, learning data is separated into "learning data" and "validation data used to determine whether to stop learning, and the validation data is used to determine whether to stop learning.

In step S26, based on an identification result that the learning termination condition is satisfied in step S25, the storing and reading unit 59 stores the global model that has undergone the learning process using the learning data in the local model management DB 3002 as a local model, and the data exchange unit 31 transmits the local model obtained by executing the learning process and the number of data calculated in step S23 to the server 5.

As described above, the communication device 3 transmits the local model and the number of data to the server 5, but the local data is not transmitted and remains distributed. The global model is updated based on the local model and the number of data as illustrated in FIG. 5.

In addition, by providing incentives to clients according to the contribution degree to the federated learning model while the local data remains distributed, motivation to contribute to the model of the federated learning is provided while ensuring client privacy and security.

Furthermore, in the first example, since the calculation unit 57 calculates the contribution degree based on the number of data of each of the plurality of communication devices 3, calculation of the contribution degree is facilitated.

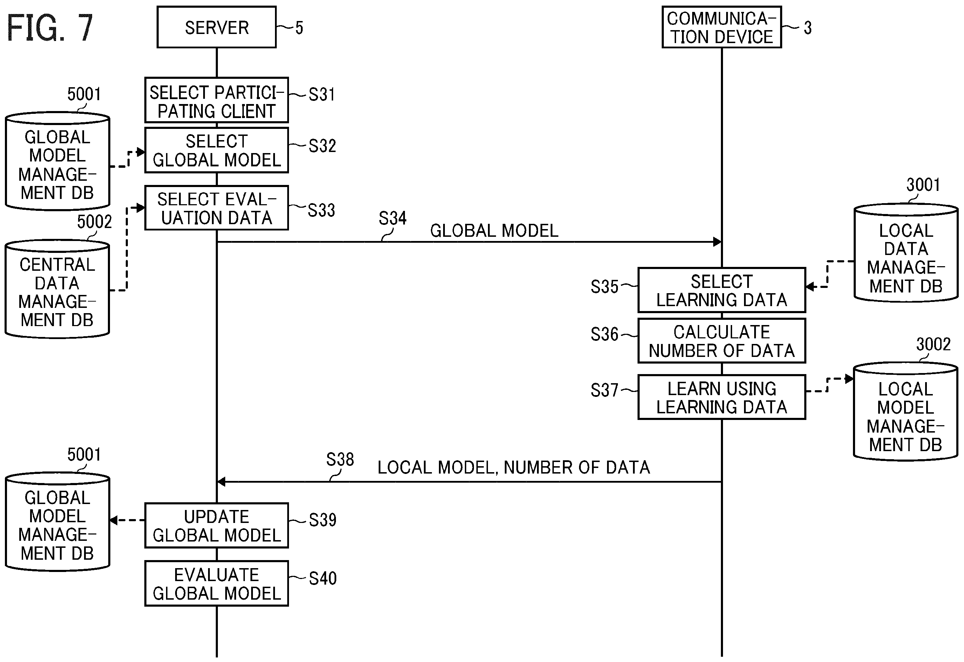

FIG. 7 is a first sequence diagram illustrating a second example of the process according to the present embodiment.

In the second example, the contribution degree of each client is calculated according to the contribution degree to model accuracy and the incentive for each client is determined based on a calculated result for each client.

Specifically, the contribution degree to model accuracy is calculated based on the accuracy of the federated learning model achieved with the participation of all clients and the accuracy of the federated learning model achieved with a target client to calculate the contribution degree excluded from the federated learning.

FIG. 7 illustrates a process according to the second example with participation of all clients.

In step S31, the selection unit 54 of the server 5 selects communication devices 3 of all clients participating in the federated learning. In step S32, the storing and reading unit 59 selects a global model to be distributed to each communication device 3 from the global models read from the global model management DB 5001. In the second example illustrated in FIG. 7, similar to the first example described in FIG. 4, the selection unit 54 selects the same global model for all communication devices 3 participating in the federated learning.

In step S33, the selection unit 54 selects evaluation data to be used for evaluating the accuracy of the global model from the central data that the storing and reading unit 59 read from the central data management DB 5002.

In step S34, the data exchange unit 51 transmits the global model selected in step S32 to each communication device 3, and the data exchange unit 31 of each communication device 3 receives the global model transmitted from the server 5.

In step S35, the selection unit 34 selects learning data to be used in the learning process from the local data read from the local data management DB 3001 by the storing and reading unit 39. In step S36, the calculation unit 37 calculates the number of learning data selected in step S35.

In step S37, the learning processing unit 38 executes the learning process on the global model received in step S34 using the learning data selected in step S35, and in response to completion of the learning process, the storing and reading unit 59 stores the global model that has undergone the learning process using the learning data in the local model management DB 3002 as a local model.

In step S38, the data exchange unit 31 transmits the number of data calculated in step S36 and the local model obtained in step S37 to the server 5, and the data exchange unit 51 of the server 5 receives the number of data and the local model transmitted from each communication device 3.

In step S39, the update unit 52 updates the global model selected in step S32 based on the number of data and the local model in each communication device 3 received in step S38.

In step S40, the evaluation unit 56 calculates an evaluation value of the accuracy of the global model updated in step S39 based on the evaluation data selected in step S33.

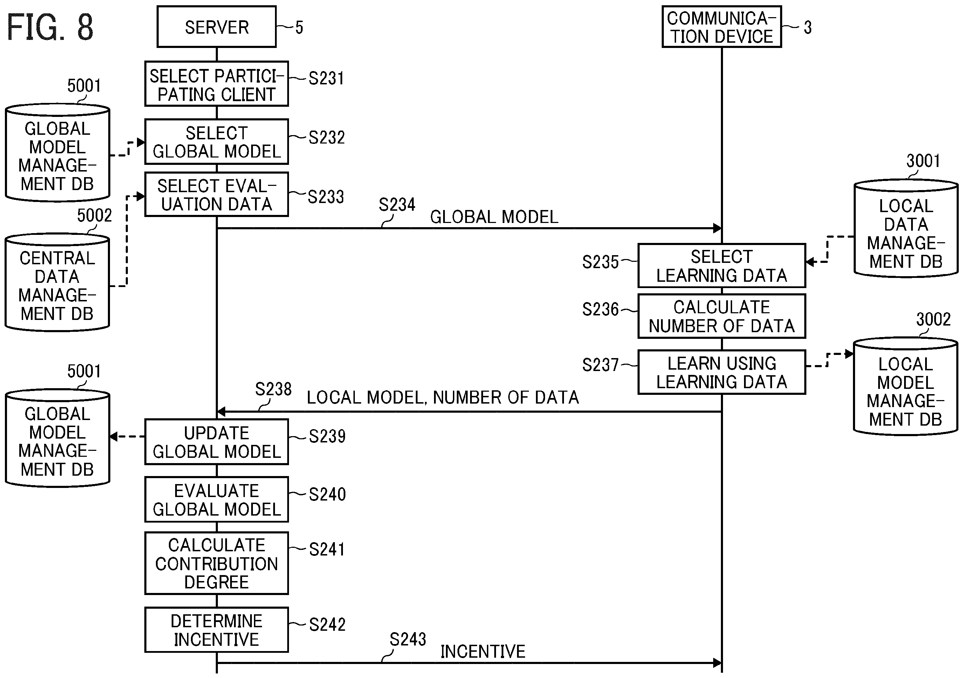

FIG. 8 is a second sequence diagram illustrating the second example of the process according to the present embodiment.

FIG. 8 illustrates a process to exclude a target client from the federated learning and a process to calculate the contribution degree of the target client in the second example.

In step S231, the selection unit 54 of the server 5 selects the communication devices 3 of the clients excluding the target client to calculate the contribution degree from all the clients participating in the federated learning, and the server 5 and the communication device 3 execute steps S232 to S240 similar to steps S32 to S40 in FIG. 7.

In step S241, the calculation unit 57 calculates the contribution degree of the local model of the target communication device 3 to the global model updated in step S39 based on the evaluation value of the global model calculated in step S40 and the evaluation value of the global model calculated in step S240. In step S242, the determination unit 53 determines the incentive of the client of the target communication device 3 based on the contribution degree of the local model of the target communication device 3 calculated in step S241.

In step S243, the data exchange unit 51 transmits the incentive determined in step S242 to the target communication device 3, and the data exchange unit 31 of the target communication device 3 receives the incentive transmitted from the server 5.

The server 5 and the communication device 3 execute steps S231 to S243 for each target communication device 3, until all the communication devices 3 receive the incentive.

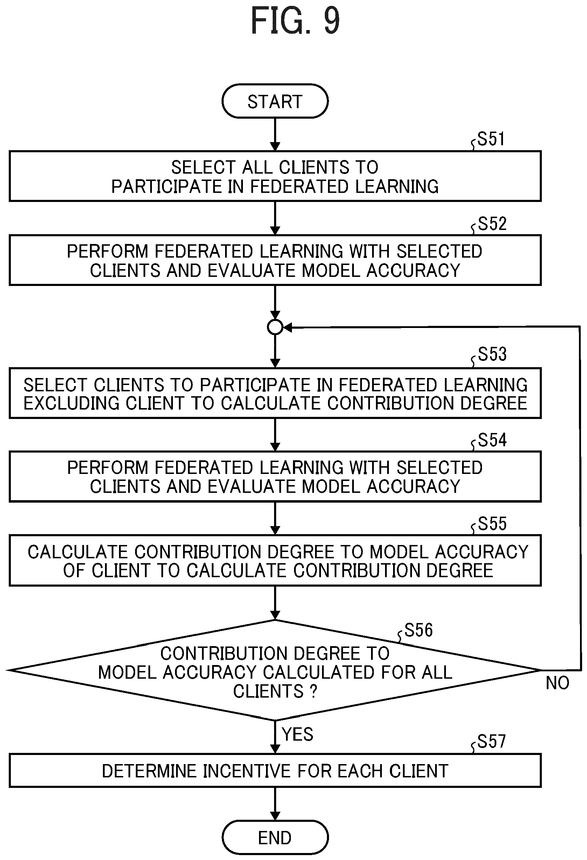

FIG. 9 is a flowchart illustrating the overall process executed by the server 5 according to the second example illustrated in FIGs. 7 and 8.

In step S51, the selection unit 54 selects communication devices 3 of all clients participating in the federated learning. In step S52, the server 5 executes the federated learning together with the communication device 3, as illustrated in steps S32 to S40 in FIG. 7, and evaluates the accuracy of the updated global model.

In step S53, the selection unit 54 selects the communication devices 3 of the clients excluding the target client to calculate the contribution degree from all the clients participating in the federated learning. In step S55, the server 5 executes the federated learning together with the communication device 3, as illustrated in steps S232 to S240 in FIG. 8, and evaluates the accuracy of the updated global model.

In step S55, the calculation unit 57 calculates the contribution degree of the local model of the target communication device 3 to the global model updated in step S52, based on the global model evaluation value obtained in step S52 and the global model evaluation value obtained in step S54.

As an example, the calculation unit 57 calculates the contribution degree of the local model of the target communication device 3 using the following equation.

Equation (2):

$$K_i = \frac{1.0 - E_i}{E_{All}}$$

In the equation (2), Ei indicates the evaluation value of the global model with the federated learning performed excluding the i-th client obtained in step S54, EAll indicates the evaluation value of the global model obtained in step S54 with all clients participating in the federated learning, and Ki indicates the contribution degree of the i-th client. The evaluation value E is an example where the value range is 0 to 1, such as accuracy, precision, recall, f1, and the like, and the closer the value is to 1, the higher the accuracy is. For example, in the case the evaluation value E is more accurate as the value approaches 0, such as loss, the calculation unit 57 may calculate the contribution degree using the following equation.

Equation (3):

$$K_i = \frac{E_i}{E_{All}}$$

The contribution degree calculation method is not limited to the above description, and any calculation method based on the global model evaluation value obtained in step S52 and the global model evaluation value obtained in step S54 are acceptable.

Furthermore, the calculation unit 57 may calculate a contribution degree rate using the following equation based on the contribution degree of each client calculated above.

Equation (4):

$$C_i = \frac{K_i}{\sum_{k=1}^{n} K_k}$$

In the equation (4), n represents the number of clients, Ki represents the contribution degree of the i-th client, and Ci represents the contribution degree rate of the i-th client. The contribution degree rate calculation method is not limited to the above method, and any calculation method based on the contribution degree of each client calculated above is acceptable.

In step S56, the identification unit 55 identifies whether the contribution degrees of the local models of the communication devices 3 of all clients have been calculated, and in the case a client communication device 3 for which the contribution degree of the local model is not calculated is remaining, the process returns to step S53, and processing is executed for the client communication device 3 for which the contribution degree is not calculated.

In step S57, based on an identification result in step S56 that the contribution degrees of the local models of the communication devices 3 of all clients are calculated, the determination unit 53 determines the incentive of each client based on the contribution degree of the local model of the communication device 3 of each client calculated in step S55, and the data exchange unit 51 transmits the determined incentive to the communication device 3 of each client.

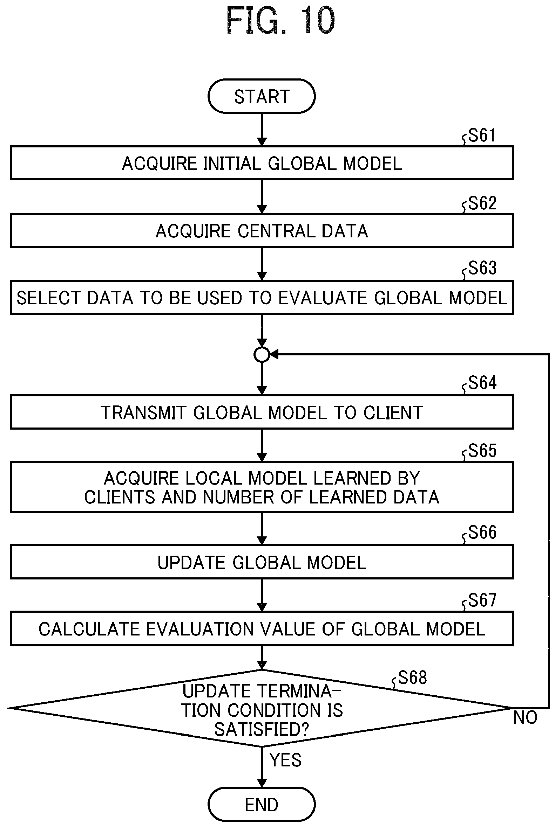

FIG. 10 is a flowchart illustrating details of steps S52 and S54 of the process illustrated in FIG. 9.

In step S61, the selection unit 54 of the server 5 selects a global model to be distributed to each communication device 3 from the global models read from the global model management DB 5001 by the storing and reading unit 59. In the second example illustrated in FIG. 9, similar to the first example described in FIG. 5, the selection unit 54 selects the same global model for all communication devices 3 participating in the federated learning.

The selection unit 54 may select a previously used global model, a global model based on a client model trained by a specific client, or a global model trained in advance on a general-purpose dataset.

In step S62, the storing and reading unit 59 reads and acquires the central data from the central data management DB 5002. In step S63, the selection unit 54 selects evaluation data to be used for evaluating the accuracy of the global model from the central data acquired in step S62.

The selection unit 54 is preferred to use a stratified sampling method to select evaluation data, but the selection unit 54 may select all of the central data acquired in step S62 as evaluation data or randomly select evaluation data. The stratified sampling method is a method of selecting evaluation data to enable the same distribution as the data held.

In step S64, the data exchange unit 51 transmits the global model selected in step S61 to each communication device 3.

In step S65, the data exchange unit 51 receives the number of data and the local model transmitted from each communication device 3.

In step S66, the update unit 52 updates the global model selected in step S61, similar to step S14 in FIG. 5, based on the number of data in each communication device 3 and the local model each received in step S65.

In step S67, the evaluation unit 56 calculates an evaluation value of the accuracy of the global model updated in step S66 based on the evaluation data selected in step S63. The examples of evaluation values include accuracy, precision, recall, f1, loss, and the like, but the evaluation value is not limited to these examples, and any value to evaluate the performance of the machine learning model are acceptable.

In step S68, similar to step S16 of FIG. 5, the identification unit 55 identifies whether the update termination condition is satisfied, and based on an identification result that the update termination condition is not satisfied, the process returns to step S64. The identification unit 55 may use the evaluation value calculated in step S67 to identify whether the update termination condition is satisfied.

The flowchart illustrating the process executed by the server according to the second example is described above. The flowchart illustrating the process executed by the communication device according to the second example is the same as the flowchart illustrating the process executed by the communication device according to the first example described with reference to FIG. 6, and therefore the description thereof is omitted.

In the second example, since the calculation unit 57 calculates the contribution degree to model accuracy using the accuracy of the federated learning model achieved with participation of all clients and the accuracy of the federated learning model achieved with the targeted client to calculate contribution degree excluded from the federated learning, the contribution degree is calculated with high accuracy.

In the second example, since the evaluation unit 56 of the server 5 evaluates the global model based on the central data, the general-purpose performance of the global model is evaluated accurately.

As a modification of the second example, the contribution degree to model accuracy is calculated using the accuracy of the federated learning model achieved with participation of all clients, and the accuracy of the federated learning model achieved with the client targeted for the contribution degree calculation.

In the modification of the second example, in step S231 of FIG. 8, the selection unit 54 of the server 5 selects the communication device 3 of the target client to calculate contribution degree, and in step S239, the update unit 52 updates the global model, based on the number of data in the target communication device 3 and the local model each received in step S238. In the modification of the second example, the calculation unit 57 calculates the contribution degree of the local model of the target communication device 3 based on the evaluation value of the global model and the evaluation value of the local model.

In a second modification of the second example, the contribution degree is calculated more accurately than the first example, and calculation of the contribution degree is facilitated compared to the second example illustrated in FIGs. 7 and 8.

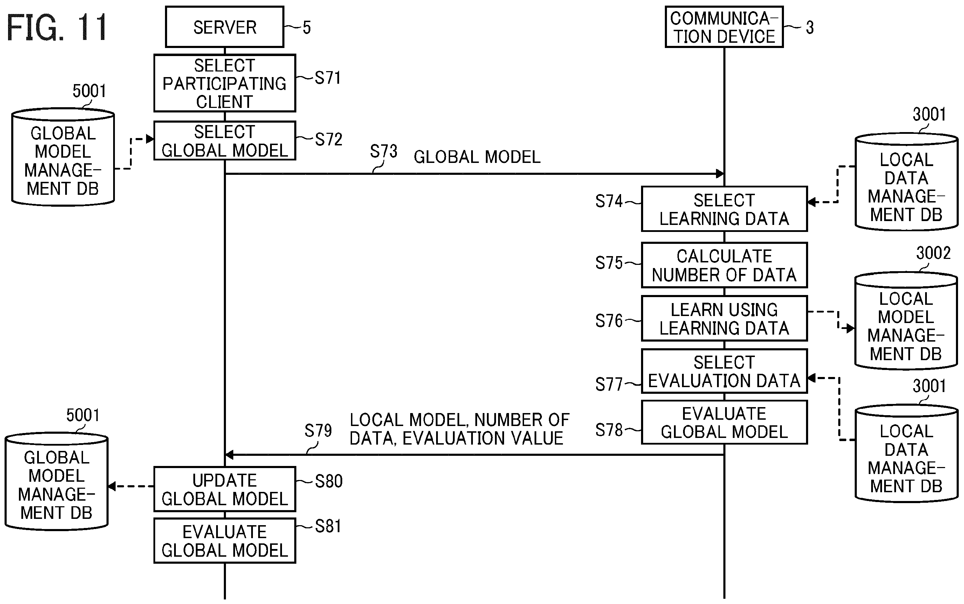

FIG. 11 is a first sequence diagram illustrating a third example of the process according to the present embodiment.

In the second example, as in the third example, the contribution degree of each client is calculated according to the contribution degree to model accuracy, and the incentive for each client is determined based on a calculated result for each client.

In the second example, the accuracy of the global model was evaluated based on the central data, but in the third example, the accuracy of the global model is evaluated based on the local data of each client.

FIG. 11 illustrates a process according to the third example with participation of all clients.

In step S71, the selection unit 54 of the server 5 selects communication devices 3 of all clients participating in the federated learning. In step S72, the storing and reading unit 59 selects a global model to be distributed to each communication device 3 from the global models read from the global model management DB 5001. In the third example illustrated in FIG. 11, similar to the first example explained in FIG. 4 and the second example explained in FIG. 7, the selection unit 54 selects the same global model for all communication devices 3 participating in the federated learning.

In the third example, in order to evaluate the accuracy of the global model selected by the selection unit 54 at a later stage, the selection unit 54 selects a global model that is updated in the past with the participation of a target client to calculate contribution degree.

In step S73, the data exchange unit 51 transmits the global model selected in step S72 to each communication device 3, and the data exchange unit 31 of each communication device 3 receives the global model transmitted from the server 5.

In step S74, the selection unit 34 selects learning data to be used in the learning process from the local data read from the local data management DB 3001 by the storing and reading unit 39. In step S75, the calculation unit 37 calculates the number of learning data selected in step S74.

In step S76, the learning processing unit 38 executes the learning process on the global model received in step S73 using the learning data selected in step S74, and in response to completion of the learning process, the storing and reading unit 59 stores the global model that has undergone the learning process using the learning data in the local model management DB 3002 as a local model.

In step S77, the selection unit 34 selects evaluation data to be used for evaluating the accuracy of the global model from the local data read from the local data management DB 3001 by the storing and reading unit 59.

In step S78, the evaluation unit 36 calculates an evaluation value of the accuracy of the global model received in step S73 based on the evaluation data selected in step S77.

In step S79, the data exchange unit 31 transmits the number of data calculated in step S74, the local model obtained in step S76, and the evaluation value calculated in step S78 to the server 5, and the data exchange unit 51 of the server 5 receives the number of data, local model, and evaluation value transmitted from each communication device 3.

In step S80, the update unit 52 updates the global model selected in step S72 based on the number of data and the local model in each communication device 3 received in step S79.

In step S81, the evaluation unit 56 calculates the evaluation value of the accuracy of the global model selected in step S72 based on the evaluation value by each communication device 3 received in step S79.

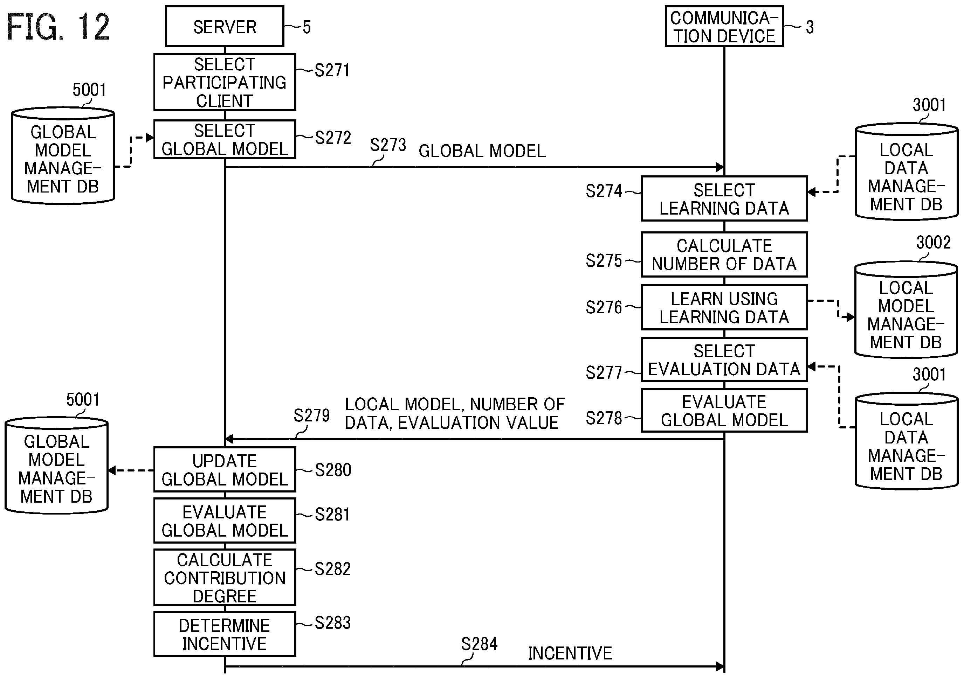

FIG. 12 is a second sequence diagram illustrating the third example of the process according to the present embodiment.

FIG. 12 illustrates a process to exclude a target client from the federated learning and a process to calculate the contribution degree of the target client in the third example.

In step S271, the selection unit 54 of the server 5 selects the communication devices 3 of the clients excluding the target client for calculation of contribution degree level from all the clients participating in the federated learning, and the server 5 and the communication device 3 execute steps S272 to S281 similar to steps S72 to S81 in FIG. 11.

In step S282, the calculation unit 57 calculates, the contribution degree of the local model of the target communication device 3 to the global model selected in step S72 based on the global model evaluation value calculated in step S81 and the global model evaluation value calculated in step S281. In step S283, the determination unit 53 determines the incentive of the client of the target communication device 3 based on the contribution degree of the local model of the target communication device 3 calculated in step S282.

In step S284, the data exchange unit 51 transmits the incentive determined in step S283 to the target communication device 3, and the data exchange unit 31 of the target communication device 3 receives the incentive transmitted from the server 5.

The server 5 and the communication device 3 execute steps S271 to S284 for each target communication device 3, until all the communication devices 3 receive the incentive.

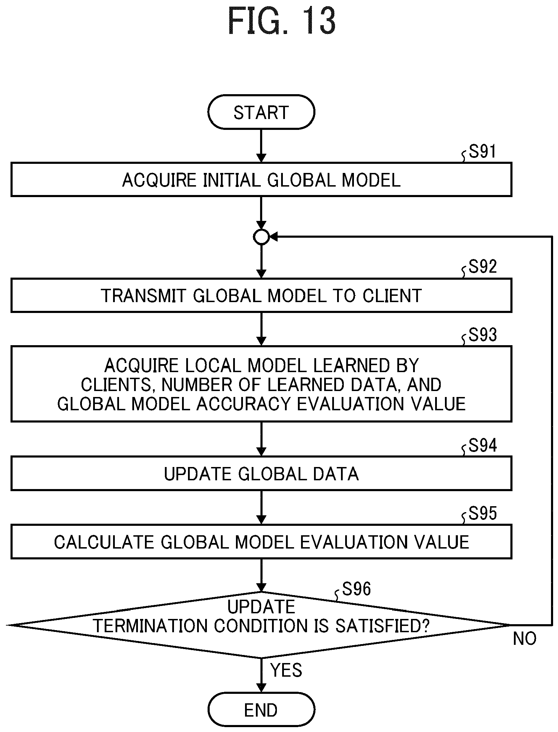

FIG. 13 is a flowchart illustrating a process executed by the server according to the third example illustrated in FIGs. 11 and 12. The overall process executed by the server according to the third example is similar to the flowchart of the second example illustrated in FIG. 9.

In step S91, the selection unit 54 of the server 5 selects a global model to be distributed to each communication device 3 from the global models read from the global model management DB 5001 by the storing and reading unit 59. In the third example illustrated in FIG. 13, similar to the first example illustrated in FIG. 5 and the second example illustrated in FIG. 9, the selection unit 54 selects the same global model for all communication devices 3 participating in the federated learning.

In the third example, in order to evaluate the accuracy of the global model selected by the selection unit 54 at a later stage, the selection unit 54 selects a global model updated in the past with the participation of a target client to calculate the contribution degree.

In step S92, the data exchange unit 51 transmits the global model selected in step S91 to each communication device 3.

In step S93, the data exchange unit 51 receives the number of data, local model, and evaluation value transmitted from each communication device 3.

In step S94, the update unit 52 updates the global model selected in step S91, similar to step S14 in FIG. 5, based on the number of data in each communication device 3 and the local model each received in step S93.

In step S95, the evaluation unit 56 calculates the evaluation value of the accuracy of the global model selected in step S91 based on the evaluation value by each communication device 3 received in step S93.

The evaluation unit 56 uses an average value of the evaluation values by each communication device 3 received in step S93, a weighted average value according to the number of data received in step S79, and the like, and calculates evaluation values by all communication devices 3 participating in the federated learning.

Alternatively, the evaluation value for each client obtained in the past and the evaluation value for each client obtained this time may be averaged. The evaluation value is not limited to the above examples, and any value that evaluates the performance of the machine learning model based on the evaluation value received by each communication device 3 in step S93 is acceptable.

In step S96, similar to step S15 in FIG. 5, the identification unit 55 identifies whether the update termination condition is satisfied, and based on an identification result that the update termination condition is not satisfied, the process returns to step S92. The identification unit 55 may use the evaluation value calculated in step S95 to identify whether the update termination condition is satisfied.

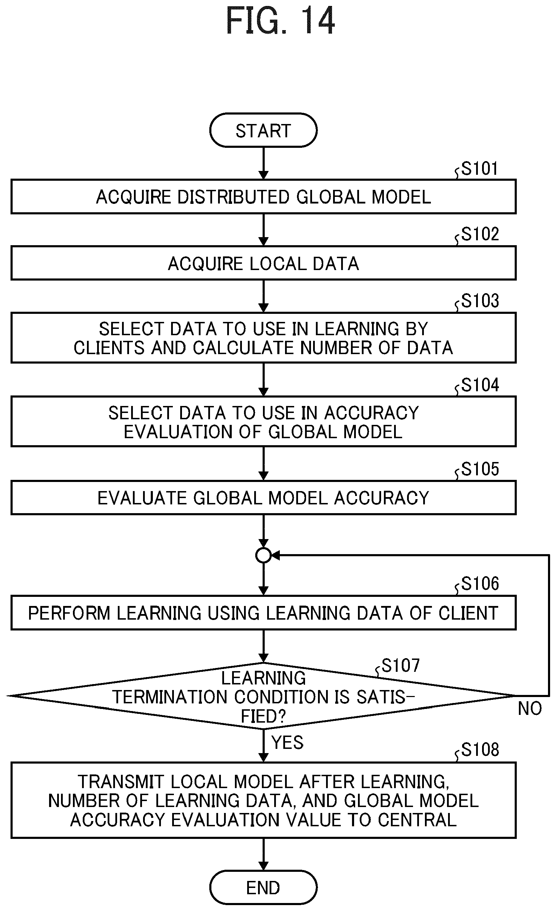

FIG. 14 is a flowchart illustrating a process executed by the communication device according to the third example illustrated in FIGs. 11 and 12.

In step S101, the data exchange unit 31 of the communication device 3 receives and acquires the global model distributed by transmission from the server 5.

In step S102, the storing and reading unit 39 reads and acquires the local data from the local data management DB 3001.

In step S103, the selection unit 34 selects learning data to be used in the learning process from the local data acquired in step S102, and the calculation unit 37 calculates the number of selected learning data.

In step S104, the selection unit 34 selects evaluation data to be used for evaluating the accuracy of the global model from the local data read from the local data management DB 3001 by the storing and reading unit 59, similar to step S63 in FIG. 10.

In step S105, the evaluation unit 36 calculates an evaluation value of the accuracy of the global model received in step S101, based on the evaluation data selected in step S104, similar to step S67 in FIG. 10.

In step S106, the learning processing unit 38 executes the learning process on the global model received in step S101 using the learning data selected in step S103.

In step S107, similar to step S25 of FIG. 6, the identification unit 35 identifies whether the update termination condition is satisfied, and based on an identification result that the update termination condition is not satisfied, the process returns to step S106.

In step S108, based on determination that the learning termination condition is satisfied in step S107, the storing and reading unit 59 stores the global model that has undergone the learning process using the learning data in the local model management DB 3002 as a local model, and the data exchange unit 31 transmits the local model obtained by executing the learning process, the number of data calculated in step S23, and the evaluation value calculated in step S78 to the server 5.

In the third example described above, similar to the second example, since the calculation unit 57 calculates the contribution degree to model accuracy using the accuracy of the federated learning model achieved with the participation of all clients and the accuracy of the federated learning model achieved with the target client to calculate contribution degree excluded from the federated learning, the contribution degree is calculated with high accuracy.

In the third example, as in the second example, as a modified example, the contribution degree to model accuracy may be calculated using the accuracy of the federated learning model achieved with participation of all clients, and the accuracy of the federated learning model achieved with participation of just the target client to calculate the contribution degree.

In the third example, since the evaluation unit 36 of the communication device 3 evaluates the global model based on the local data, the performance specific to the specific communication terminal 3 of the global model is evaluated with high accuracy.

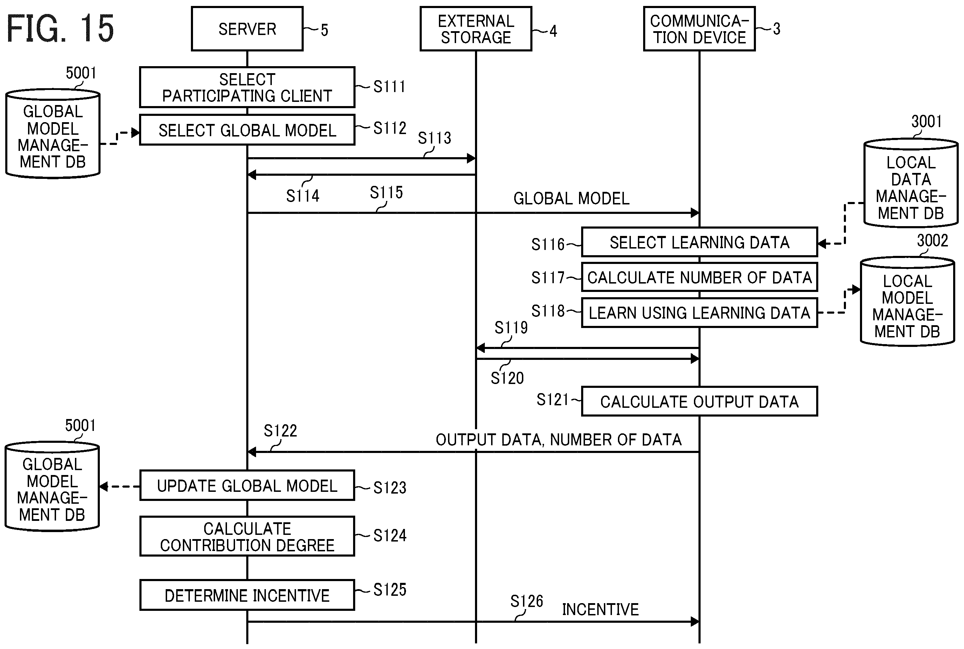

FIG. 15 is a sequence diagram illustrating a fourth example of the process according to the present embodiment.

In the fourth example the global model is not updated based on the local model as in the first to third examples, but a process related to federated distillation is executed to update the global model based on the output data obtained by inputting shared data to the local model.

In step 5111, the selection unit 54 of the server 5 selects a communication device 3 of a client to participate in the federated learning. In step S112, the storing and reading unit 59 selects a global model to be distributed to each communication device 3 from the global models read from the global model management DB 5001. In the fourth example illustrated in FIG. 15, the selection unit 54 may select the same global model for all communication devices 3 participating in the federated learning, or may select a global model with a different structure for each communication device 3.

In step S113, the data exchange unit 51 transmits information requesting shared data to the external storage 4, and in step S114 receives the shared data transmitted from the external storage 4.

In step S115, the data exchange unit 51 transmits the global model selected in step S112 to each communication device 3, and the data exchange unit 31 of each communication device 3 receives the global model transmitted from the server 5.

In step S116, the selection unit 34 selects learning data to be used in the learning process from the local data read from the local data management DB 3001 by the storing and reading unit 39. In step S117, the calculation unit 37 calculates the number of learning data selected in step S 116.

In step S118, the learning processing unit 38 executes the learning process on the global model received in step S115 using the learning data selected in step S 116, and in response to completion of the learning process, the storing and reading unit 59 stores the global model that has undergone the learning process using the learning data in the local model management DB 3002 as a local model.

In step S119, the data exchange unit 31 transmits information requesting shared data to the external storage 4, and in step S120, receives the shared data transmitted from the external storage 4.

In step S121, the calculation unit 37 calculates output data obtained by inputting the shared data received in step S120 to the local model obtained in step S 118.

In step S122, the data exchange unit 31 transmits the number of data calculated in step S117 and the output data calculated in step S121 to the server 5, and the data exchange unit 51 of the server 5 receives the number of data transmitted from each communication device 3 and the output data.

In step S123, the update unit 52 updates the global model selected in step S 112 based on the shared data received in step S114 and the number of data and output data in each communication device 3 received in step S122.

In step S124, the calculation unit 57 calculates the contribution degree of the local model of each communication device 3 to the global model updated in step S 123 based on the number of data in each communication device 3 received in step S122, and in step S125, the determination unit 53 determines the incentive of the client of each communication device 3 based on the contribution degree of the local model of each communication device 3 calculated in step S124.

In step S126, the data exchange unit 51 transmits the incentive determined in step S125 to each communication device 3, and the data exchange unit 31 of each communication device 3 receives the incentive transmitted from the server 5.

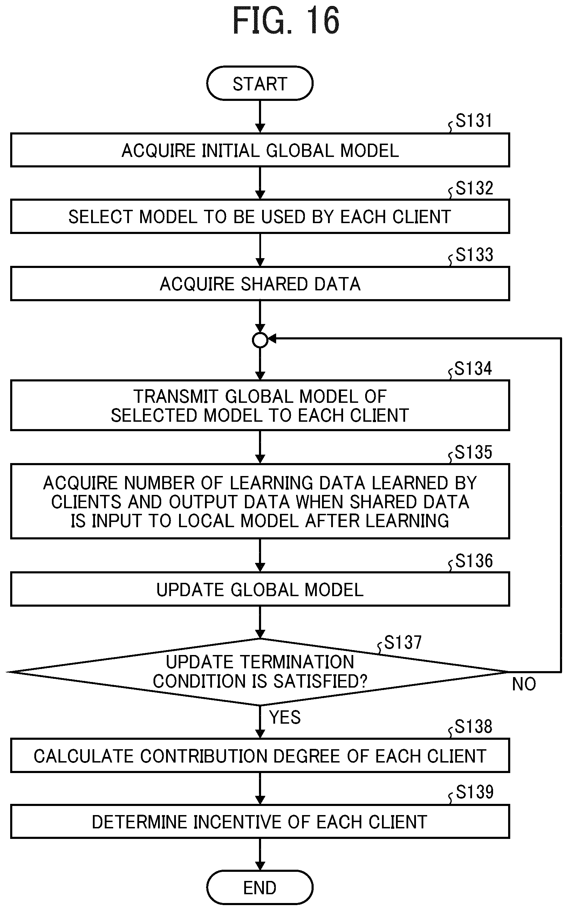

FIG. 16 is a flowchart illustrating the process executed by the server according to the fourth example illustrated in FIG. 15.

In step S131, the storing and reading unit 59 of the server 5 reads and acquires the global model from the global model management DB 5001. The global model to be acquired may be a previously used global model, a global model based on a client model learned with a specific client, or a global model learned in advance with a general-purpose dataset.

In step S132, the selection unit 54 selects a global model to be distributed to each communication device 3. In the fourth example illustrated in FIG. 16, the selection unit 54 may select the same global model for all communication devices 3 participating in the federated learning, or may select a global model with a different structure for each communication device 3. Here, using Neural Network as an example, the different structure refers to different structures of the Neural Network, such as the layer configuration of the Neural Network and the number of channels in each layer.

The selection unit 54 may select a global model at random, a global model according to the number of data of each client, a global model frequently used by each client, or a global model desired by the client.

In step S133, the data exchange unit 31 transmits information requesting shared data to the external storage 4, and receives and acquires the shared data transmitted from the external storage 4. The shared data is data to be shared by both the server 5 and the communication terminal 3, and refers to a data set that does not demand a label. Since the shared data does not demand labels, annotation work is not performed.

In step S134, the data exchange unit 51 transmits the global model selected in step S131 to each communication device 3.

In step S135, the data exchange unit 51 receives and acquires the number of data transmitted from each communication device 3 and the output data obtained by inputting the shared data to the learned local model.

In step S136, the update unit 52 updates the global model based on the shared data acquired in step S133 and the number of data and output data in each communication device 3 received in step S135.

The update unit 52 may update the global model based on the average value of output data from each communication device 3, and in addition to simply averaging the output data of each client, the global model may be updated based on a weighted average value according to the number of data in each communication device 3.

As a method for updating the global model, knowledge distillation, which is a known technique, may be used. In the fourth example, a teacher model in knowledge distillation represents the average value of output data obtained from each client, and a student model represents the global model. The method of generating the student model from the teacher model is widely known, and detailed description is omitted here.

In step S137, similar to step S15 of FIG. 5, the identification unit 55 identifies whether the update termination condition is satisfied, and based on an identification result that the update termination condition is not satisfied, the process returns to step S134.

In step S138, based on an identification result that the update termination condition is satisfied in step S137, the calculation unit 57, similar to step S16 in FIG. 5, calculates the contribution degree of the client of each communication device 3 to the global model updated in step S136 based on the number of data in each communication device 3 received in step S135.

In step S139, the determination unit 53 determines the incentive of the client of each communication device 3 based on the contribution degree calculated in step S138, similar to step S17 in FIG. 5.

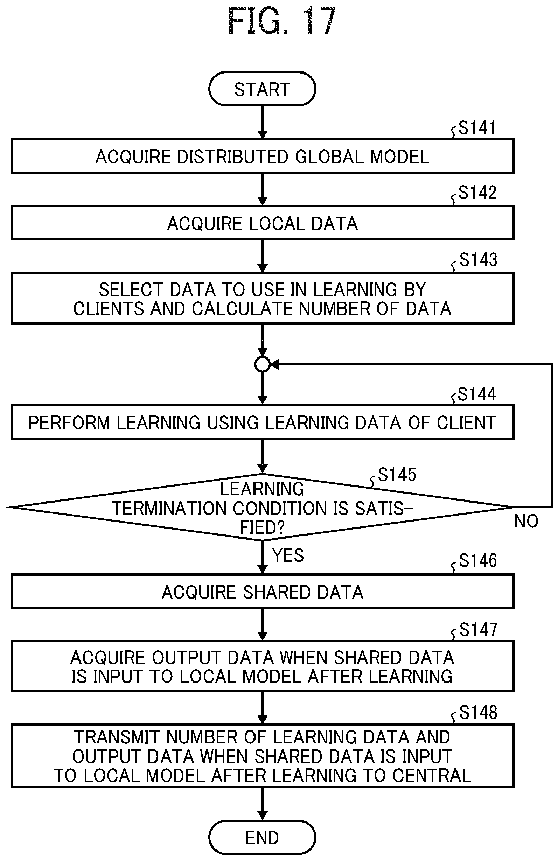

FIG. 17 is a flowchart illustrating a process executed by the communication device 3 according to the fourth example illustrated in FIG. 15.

In step S141, the data exchange unit 31 of the communication device 3 receives and acquires the global model distributed by transmission from the server 5.

In step S142, the storing and reading unit 39 reads and acquires local data from the local data management DB 3001.

In step S143, the selection unit 34 selects learning data to be used in the learning process from the local data acquired in step S22, and the calculation unit 37 calculates the number of selected learning data.

In step S144, the learning processing unit 38 executes the learning process on the global model received in step S21 using the learning data selected in step S5.

In step S145, similar to step S25 in FIG. 6, the identification unit 35 identifies whether the learning termination condition is satisfied, and based on an identification result that the learning termination condition is not satisfied, the process returns to step S144, and based on an identification result that the learning termination condition is satisfied, the storing and reading unit 59 stores the global model that has undergone the learning process using the learning data in the local model management DB 3002 as a local model.

In step S146, the data exchange unit 31 transmits information requesting shared data to the external storage 4, and receives and acquires the shared data transmitted from the external storage 4.

In step S147, the calculation unit 37 calculates output data obtained by inputting the shared data received in step S146 to the local model obtained in step S145.

In step S148, the data exchange unit 31 transmits the number of data calculated in step S143 and the output data calculated in step S147 to the server 5.

The fourth example described above implements the same effects as the first example. The fourth example does not update the global model based on the local model as in the first to third examples, but a process related to the federated distillation is executed to update the global model based on the output data obtained by inputting shared data to the local model.

In this case, in the fourth example, the local models used by the clients may not be the same as in the first to third examples, and each client may use a local model with a different structure.

Accordingly, a more appropriate model structure according to each client's situation, such as the number of data, data distribution, frequently used model structures, and the like can be selected which may lead to improved accuracy. For example, a client with a small number of data may select a small model with a small number of Neural Network layers, and a client with a large number of data, may select a large model with a large number of Neural Network layers.

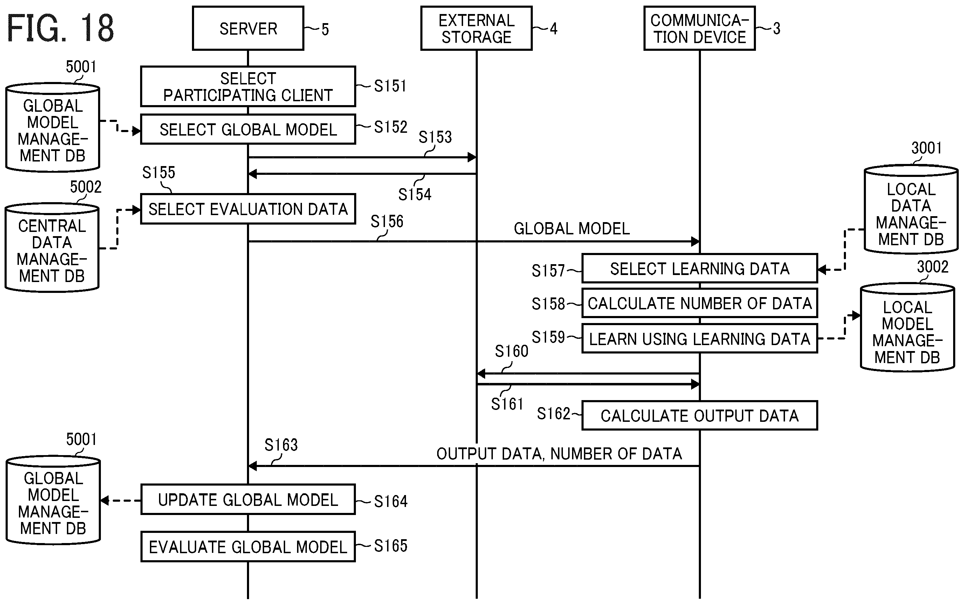

FIG. 18 is a first sequence diagram illustrating a fifth example of the process according to the present embodiment.

In the fifth example, the contribution degree of each client is calculated according to the contribution degree to model accuracy obtained by the federated distillation, and the incentive for each client is determined based on a calculated result for each client.

Specifically, the contribution degree to model accuracy is calculated based on the accuracy of the federated learning model achieved with the participation of all clients and the accuracy of the federated learning model achieved with the target client to calculate the contribution degree excluded from the federated learning.

FIG. 18 illustrates a process according to the fifth example with participation of all clients.

In step S151, the selection unit 54 of the server 5 selects communication devices 3 of all clients participating in the federated learning. In step S152, the storing and reading unit 59 selects a global model to be distributed to each communication device 3 from the global models read from the global model management DB 5001. In the fifth example illustrated in FIG. 18, the selection unit 54 may select the same global model for all communication devices 3 participating in the federated learning, or may select a global model with a different structure for each communication device 3.

In step S153, the data exchange unit 51 transmits information requesting shared data to the external storage 4, and in step S154, receives the shared data transmitted from the external storage 4.

In step S155, the selection unit 54 selects evaluation data to be used for evaluating the accuracy of the global model from the central data that the storing and reading unit 59 read from the central data management DB 5002, similar to step S63 in FIG. 10.

In step S156, the data exchange unit 51 transmits the global model selected in step S152 to each communication device 3, and the data exchange unit 31 of each communication device 3 receives the global model transmitted from the server 5.

In step S157, the selection unit 34 selects learning data to be used in the learning process from the local data read from the local data management DB 3001 by the storing and reading unit 39. In step S158, the calculation unit 37 calculates the number of learning data selected in step S157.

In step S159, the learning processing unit 38 executes the learning process on the global model received in step S156 using the learning data selected in step S157, and in response to completion of the learning process, the storing and reading unit 59 stores the global model that has undergone the learning process using the learning data in the local model management DB 3002 as a local model.

In step S160, the data exchange unit 31 transmits information requesting shared data to the external storage 4, and in step S161, receives the shared data transmitted from the external storage 4.

In step S162, the calculation unit 37 calculates output data obtained by inputting the shared data received in step S161 to the local model obtained in step S159.

In step S163, the data exchange unit 31 transmits the number of data calculated in step S158 and the output data calculated in step S162 to the server 5, and the data exchange unit 51 of the server 5 receives the number of data transmitted from each communication device 3 and the output data.

In step S164, the update unit 52 updates the global model selected in step S152 based on the shared data received in step S154 and the number of data and output data in each communication device 3 received in step S163.

In step S165, the evaluation unit 56 calculates an evaluation value of the accuracy of the global model updated in step S164 based on the evaluation data selected in step S155.

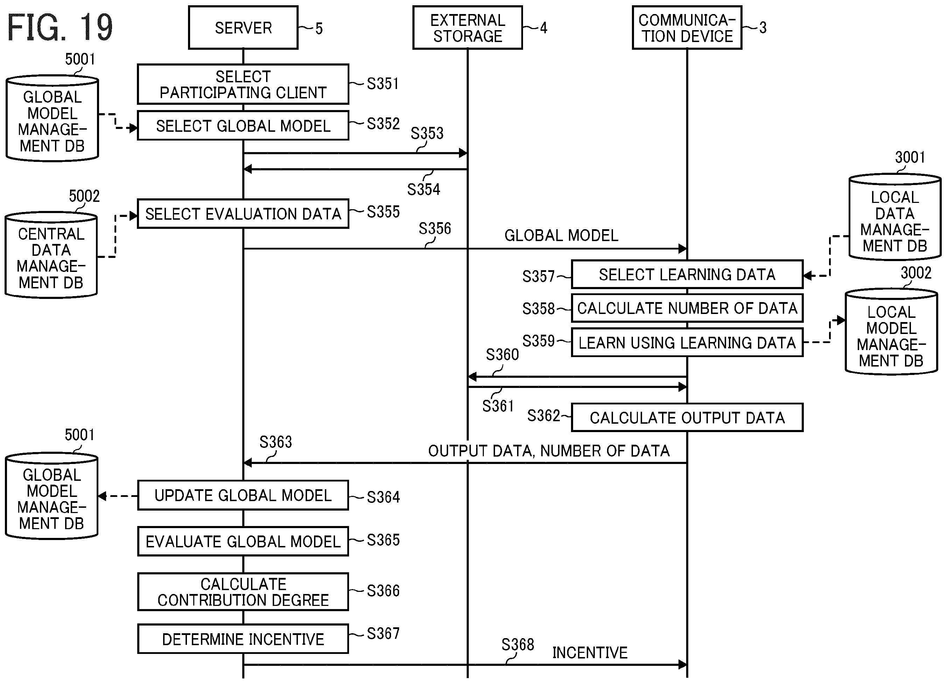

FIG. 19 is a second sequence diagram illustrating the fifth example of the process according to the present embodiment.

FIG. 19 illustrates a process to exclude a target client from the federated learning and a process to calculate the contribution degree of the target client in the fifth example.

In step S351, the selection unit 54 of the server 5 selects the communication devices 3 of the clients excluding the target client to calculate the contribution degree from all the clients participating in the federated learning, and the server 5 and the communication device 3 execute steps S352 to S365 similar to steps S152 to S165 in FIG. 18.

In step S366, the calculation unit 57 calculates, based on the global model evaluation value calculated in step S165 and the global model evaluation value calculated in step S365, the contribution degree of the local model of the target communication device 3 to the global model selected in step S165. In step S367, the determination unit 53 determines the incentive of the client of the target communication device 3 based on the contribution degree of the local model of the target communication device 3 calculated in step S366.

In step S368, the data exchange unit 51 transmits the incentive determined in step S367 to the target communication device 3, and the data exchange unit 31 of the target communication device 3 receives the incentive transmitted from the server 5.

The server 5 and the communication device 3 execute steps S351 to S368 for each target communication device 3, until all the communication devices 3 receive the incentive.

In the fifth example, as in the second example, as a modified example, the contribution degree to model accuracy may be calculated using the accuracy of the federated learning model achieved with participation of all clients, and the accuracy of the federated learning model achieved with participation of just the target client to calculate the contribution degree.

The fifth example described above implements the same effects as the second example and the same effects as the fourth example.

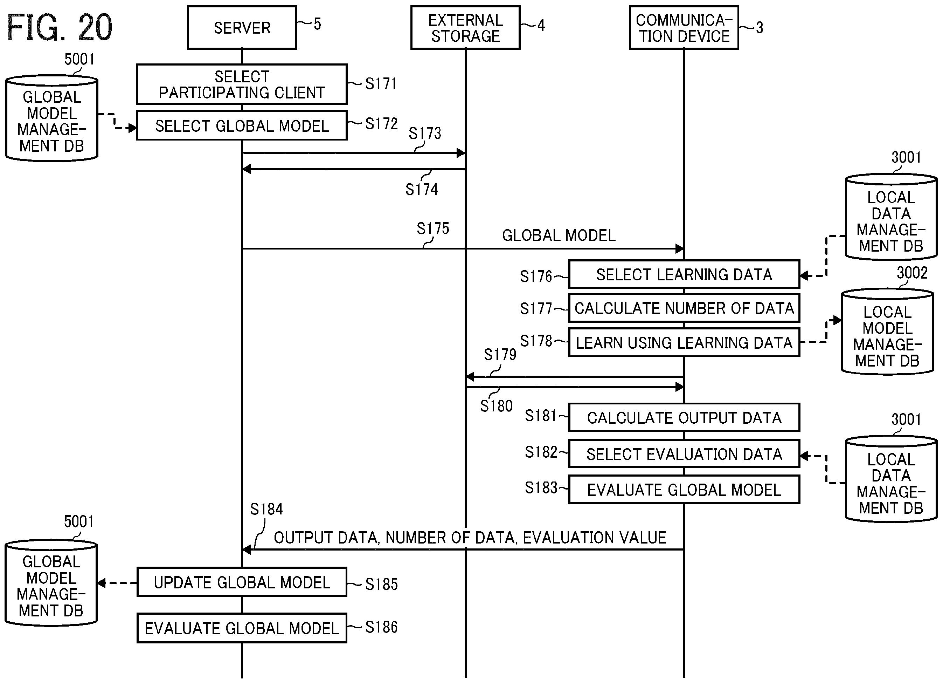

FIG. 20 is a first sequence diagram illustrating a sixth example of the process according to the present embodiment.

In the sixth example, as in the fifth example, the contribution degree of each client is calculated according to the contribution degree to model accuracy obtained by the federated distillation, and the incentive for each client is determined based on a calculated result for each client.

In the fifth example, the accuracy of the global model was evaluated based on the central data, but in the sixth example, the accuracy of the global model is evaluated based on the local data of each client.

FIG. 20 illustrates a process according to the sixth example with participation of all clients.

In step S171, the selection unit 54 of the server 5 selects communication devices 3 of all clients participating in the federated learning. In step S172, the storing and reading unit 59 selects a global model to be distributed to each communication device 3 from the global models read from the global model management DB 5001. In the sixth example illustrated in FIG. 20, the selection unit 54 may select the same global model for all communication devices 3 participating in the federated learning, or may select a global model with a different structure for each communication device 3.

In step S173, the data exchange unit 51 transmits information requesting shared data to the external storage 4, and in step S174, receives the shared data transmitted from the external storage 4.

In the sixth example, in order to evaluate the accuracy of the global model selected by the selection unit 54 at a later stage, the selection unit 54 selects a global model updated in the past with the participation of a target client to calculate the contribution degree.

In step S175, the data exchange unit 51 transmits the global model selected in step S172 to each communication device 3, and the data exchange unit 31 of each communication device 3 receives the global model transmitted from the server 5.

In step S176, the selection unit 34 selects learning data to be used in the learning process from the local data read from the local data management DB 3001 by the storing and reading unit 39. In step S177, the calculation unit 37 calculates the number of learning data selected in step S176.

In step S178, the learning processing unit 38 executes the learning process on the global model received in step S175 using the learning data selected in step S176, and in response to completion of the learning process, the storing and reading unit 59 stores the global model that has undergone the learning process using the learning data in the local model management DB 3002 as a local model.

In step S179, the data exchange unit 31 transmits information requesting shared data to the external storage 4, and in step S180, receives the shared data transmitted from the external storage 4.

In step S181, the calculation unit 37 calculates output data obtained by inputting the shared data received in step S180 to the local model obtained in step S178.

In step S182, the selection unit 34 selects evaluation data to be used for evaluating the accuracy of the global model from the local data read from the local data management DB 3001 by the storing and reading unit 59, similar to step S63 in FIG. 10.

In step S183, the evaluation unit 36 calculates an evaluation value of the accuracy of the global model received in step S175 based on the evaluation data selected in step S182.

In step S184, the data exchange unit 31 transmits the number of data calculated in step S177, the output data calculated in step S181, and the evaluation value calculated in step S183 to the server 5, and the data exchange unit 51 of the server 5 receives the number of data, the output data, and the evaluation value transmitted from each communication device 3.

In step S185, the update unit 52 updates the global model selected in step S172 based on the shared data received in step S174 and the number of data and output data in each communication device 3 received in step S184.

In step S186, the evaluation unit 56 calculates the evaluation value of the accuracy of the global model selected in step S172 based on the evaluation value by each communication device 3 received in step S184.

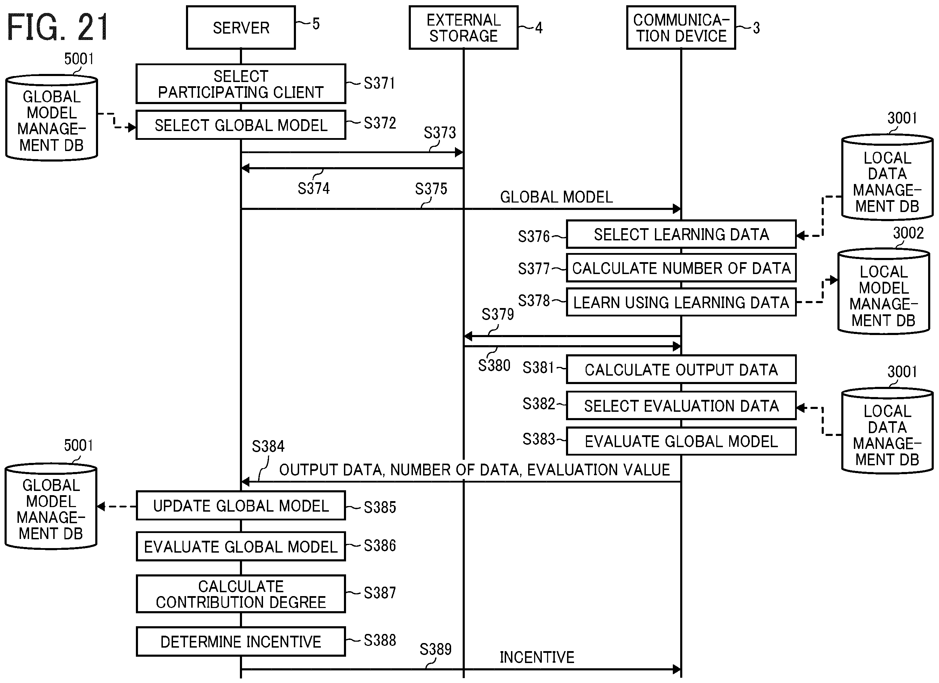

FIG. 21 is a second sequence diagram illustrating the sixth example of the process according to the present embodiment.

FIG. 21 illustrates a process to exclude a target client from the federated learning and a process to calculate the contribution degree of the target client in the sixth example.

In step S371, the selection unit 54 of the server 5 selects the communication devices 3 of the clients excluding the target client to calculate the contribution degree from all the clients participating in the federated learning, and the server 5 and the communication device 3 execute steps S372 to S386 similar to steps S172 to S186 in FIG. 20.

In step S387, the calculation unit 57 calculates the contribution degree of the local model of the target communication device 3 to the global model selected in step S372 based on the evaluation value of the global model calculated in step S186 and the evaluation value of the global model calculated in step S386. In step S388, the determination unit 53 determines the incentive of the client of the target communication device 3 based on the contribution degree of the local model of the target communication device 3 calculated in step S387.

In step S389, the data exchange unit 51 transmits the incentive determined in step S388 to the target communication device 3, and the data exchange unit 31 of the target communication device 3 receives the incentive transmitted from the server 5.

The server 5 and the communication device 3 execute steps S371 to S389 for each target communication device 3, until all the communication devices 3 receive the incentive.

In the sixth example, as in the second example, as a modified example, the contribution degree to model accuracy may be calculated using the accuracy of the federated learning model achieved with participation of all clients, and the accuracy of the federated learning model achieved with the target client to calculate the contribution degree.

The sixth example described above implements the same effects as the third example and the same effects as the fourth example.

Aspects of the present disclosure are, for example, as follows.

According to a first aspect, a server 5 includes a data exchange unit 51 to transmit information indicating a global model to a plurality of communication devices 3, and to receive from each of the plurality of communication devices 3, at least one of information indicating a local model learned based on the global model using local data processed by each of the plurality of the communication devices 3 or output data obtained by inputting shared data to the local model, an update unit 52 to update the global model based on at least one of information indicating a plurality of local models or a plurality of output data received from the plurality of communication devices 3, and a calculation unit 57 to calculate contribution degree of each of the plurality of local models or the plurality of output data to the updated global model. The server 5 is an example of the server 5, and the communication device 3 is an example of the communication device 3.

According to the first aspect, since a contribution degree of each client to the global model can be calculated while the local data is kept distributed to the communication devices 3 of each client, clients are motivated to contribute to update the global model while ensuring client privacy and security.

According to a second aspect, the server 5 of the first aspect further includes a determination unit 53 to determine incentive for each of the plurality of communication devices 3 based on the respective contribution degree of the plurality of local models or the plurality of output data.

According to the second aspect, the clients are provided with the incentives for updating the global model while the privacy and security of the clients are ensured.

According to a third aspect, the server 5 of the first aspect or the second aspect further includes a data exchange unit 51 to transmit information indicating the global model to the plurality of communication devices 3. In another example, the information indicating the global model is distributed to the plurality of communication devices 3 from an external storage 4 other than the server 5.

According to a fourth aspect, in the server 5 of any one of the first aspect to the third aspect, the data exchange unit 51 further receives amount of local data used to learn the local model, and the calculation unit 57 calculates the contribution degree based on the number of data, which is an example of the amount of data of each of the plurality of communication devices 3. According to the fourth aspect, calculation of the contribution degree is facilitated.

According to a fifth aspect, in the server 5 of any one of the first aspect to the fourth aspect, the update unit 52 updates the global model to a first global model based on information indicating a plurality of local models or output data received from each of a plurality of communication devices 3 including a specific communication device 3, and updates the global model to a second global model based on at least one of the local model or the output data received from at least one of the communication device 3 excluding the specific communication device 3 from the plurality of communication devices 3 or the specific communication device 3, and the calculation unit 57 calculates the contribution degree of at least one of the local model or the output data of the specific communication device 3 based on the evaluation of the first global model and the evaluation of the second global model.

According to the fifth aspect, the contribution degree is calculated with high accuracy. In the case the update unit 52 updates the global model to the second global model based on at least one of the local model or the output data received from the communication devices 3 excluding the specific communication device 3 from the plurality of communication devices 3, since degree of influence with the specific communication device 3 excluded is evaluated with high accuracy, the contribution degree is calculated with higher accuracy.

According to a sixth aspect, the server 5 of the fifth aspect further includes an evaluation unit 56 to evaluate each of the first global model and the second global model based on evaluation data. According to the sixth aspect, a general-purpose performance of the first global model and the second global model is evaluated with high accuracy.

According to a seventh aspect, in the server 5 of the fifth aspect, the data exchange unit 51 further receives the evaluation of the first global model based on the local data and the evaluation of the second global model based on the local data.

According to the seventh aspect, evaluation of the performance of the first global model and the second global model specific to the specific communication terminal 3 is enabled.

According to an eighth aspect, the server 5 according to an embodiment of the present disclosure includes the data exchange unit 51 to receive from each of the plurality of communication devices 3, at least one of information indicating a local model learned based on the global model using local data processed by the communication device 3 or output data obtained by inputting shared data to the local model, the update unit 52 to update the global model based on at least one of the information indicating the plurality of local models or the plurality of output data received from the plurality of communication devices 3, and the evaluation unit 56 to evaluate the updated global model based on the evaluation data. According to the eighth aspect, accurate evaluation of the general-purpose performance of the global model is enabled.

According to a ninth aspect, the communication device 3 according to an embodiment of the present disclosure includes a learning processing unit 38 to obtain a local model learned based on a global model using local data and an evaluation unit 36 to evaluate the global model updated based on at least one of the local models of a plurality of communication devices 3 or the output data of the plurality of communication devices 3 obtained by inputting shared data to the local model, based on local data. According to the ninth aspect, evaluation of the performance specific to the specific communication terminal 3 of the global model is enabled.

According to a tenth aspect, an information processing method includes transmitting information indicating a global model to a plurality of communication devices 3, receiving from each of a plurality of communication devices 3, at least one of information indicating a local model learned based on the global model using local data processed by the communication device 3 or output data obtained by inputting shared data to the local model, updating the global model based on the information indicating a plurality of local models or a plurality of output data received from the plurality of communication devices 3, and calculating contribution degree of each of the plurality of local models or the plurality of output data to the updated global model.

According to an eleventh aspect, an information processing method includes a receiving from each of a plurality of communication devices 3, at least one of information indicating a local model learned based on a global model using local data processed by the communication device 3 or output data obtained by inputting shared data to the local model, updating the global model based on information indicating a plurality of local models or a plurality of output data received from the plurality of communication devices 3, and evaluating the updated global model based on evaluation data.

According to a twelfth aspect, an information processing method includes learning to obtain a local model learned based on a global model using local data, evaluating at least one of the local model of a plurality of communication devices 3 or the global model updated based on output data of the plurality of communication devices 3 obtained by inputting shared data to the local model based on the local data.

According to a thirteenth aspect, a program causes a general computer to perform any one of the information processing methods of the tenth aspect to the twelfth aspect.

According to a fourteenth aspect, an information processing system 1 includes a server 5 and a plurality of communication devices 3 capable of communicating with the server 5, wherein each of the plurality of communication devices 3 includes a data exchange unit 31 to transmit to the server 5 at least one of information indicating a local model learned based on a global model using local data or output data obtained by inputting shared data to the local model, and the server 5 includes a data exchange unit 51 to receive at least one of the information indicating the local model or the output data from each of the plurality of communication devices 3, an update unit 52 to update the global model based on the information indicating a plurality of local models or a plurality of output data received from the plurality of communication devices 3, and a calculation unit 57 to calculate contribution degree of each of the plurality of local models or the plurality of output data to the updated global model.

According to a fifteenth aspect, an information processing system 1 includes a server 5 and a plurality of communication devices 3 capable of communicating with the server 5, wherein each of the plurality of communication devices 3 includes a data exchange unit 31 to transmit to the server 5 at least one of information indicating a local model learned based on a global model using local data or output data obtained by inputting shared data to the local model, and the server 5 includes a data exchange unit 51 to receive at least one of the information indicating the local model or the output data from each of the plurality of communication devices 3, an update unit 52 to update the global model based on information indicating a plurality of local models or a plurality of output data received from the plurality of communication devices 3, and an evaluation unit 56 to evaluate the updated global model based on evaluation data.

According to a sixteenth aspect, an information processing system 1 includes a server 5 and a plurality of communication devices 3 capable of communicating with the server 5, wherein each of the plurality of communication devices 3 includes a learning processing unit 38 to obtain a local model learned based on the global model using local data, and a data exchange unit 31 to transmit to the server 5, at least one of information indicating the local model or output data obtained by inputting shared data to the local model, and the server 5 includes a data exchange unit 51 to receive at least one of the information indicating the local model or the output data from each of the plurality of communication devices 3, an update unit 52 to update the global model based on at least one of the information indicating a plurality of local models or a plurality of output data received from the plurality of communication devices 3, a data exchange unit 51 to transmit an updated global model to the plurality of communication devices 3, and each of the plurality of communication devices 3 further includes the data exchange unit 31 to receive the updated global model from the server 5, and an evaluation unit 36 to evaluate the updated global model based on local data.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

**Claims**

1.  An information processing apparatus (5) comprising:

    a receiving unit (51) configured to receive information indicating a local model or output data, from each of a plurality of nodes,

    the information indicating the local model being obtained by learning a local data processed by the node based on a global model, the output data being obtained by inputting shared data to the local model,

    an update unit (52) configured to update the global model based on a plurality of the information indicating the local model or a plurality of the output data received from the plurality of nodes; and
    a calculation unit (57) configured to calculate a contribution degree of each of the plurality of local models or each of the plurality of output data to the updated global model.

2.  The information processing apparatus (5) of claim 1 further comprising a determination unit (53) configured to determine incentive for each of the plurality of nodes (3) based on the contribution degree of each of the plurality of local models or each of the plurality of output data.

3.  The information processing apparatus (5) of claim 1 further comprising a transmission unit (51) configured to transmit the information indicating the global model to the plurality of nodes (3).

4.  The information processing apparatus (5) of claim 1, wherein

    the receiving unit (51) is further configured to receive a number of items of the local data used in learning of the local model from each of the plurality of nodes (3), and
    the calculation unit (57) is configured to calculate the contribution degree, based on the number of items of data of each of the plurality of nodes (3).

5.  The information processing apparatus (5) of claim 1, wherein the update unit (52) is further configured to:

    update the global model to a first global model based on the plurality of the information indicating the local model or the plurality of the output data received from the plurality of nodes (3) including a specific node (3); and
    update the global model to a second global model based the local model or the output data, received from at least one of the plurality of nodes (3) excluding the specific node (3) or the specific node (3), and
    the calculation unit (57) is configured to calculate the contribution degree of the local model or the output data of the specific node (3) based on an evaluation of the first global model and an evaluation of the second global model.

6.  The information processing apparatus (5) of claim 5, further comprising an evaluation unit (36) configured to evaluate each of the first global model and the second global model based on evaluation data.

7.  An information processing apparatus (5) comprising:

    a receiving unit (51) configured to receive information indicating a local model or output data, from each of a plurality of nodes,

    the information indicating the local model being obtained by learning a local data processed by the node based on a global model, the output data being obtained by inputting shared data to the local model;

    an update unit (52) configured to update the global model based on a plurality of the information indicating the local model or a plurality of the output data received from the plurality of nodes; and
    an evaluation unit (56) configured to evaluate the updated global model based on evaluation data.

8.  A node (3) comprising:

    a learning processing unit (38) configured to obtain a local model, the local model being obtained by learning a local data based on a global model; and
    an evaluation unit (36) configured to evaluate the global model based on the local data, the global model being updated based on the local models of a plurality of nodes (3) or being updated based on output data of the plurality of nodes (3) each obtained by inputting shared data to the local model.

9.  An information processing method comprising:

transmitting (S3) information indicating a global model to a plurality of nodes (3);
receiving (S7) from each of the plurality of nodes (3), information indicating a local model or output data,

the local model being obtained by learning a local data processed by the node (3) based on the global model,
the output data being obtained by inputting shared data to the local model;

updating (S8) the global model based on a plurality of the information indicating the local model or a plurality of the output data received from the plurality of nodes (3); and
calculating (S9) a contribution degree of each of the plurality of local models or each of the plurality of output data to the updated global model.

10. An information processing method comprising:

receiving (S38) from each of a plurality of nodes (3), information indicating a local model or output data,

the information indicating the local model being obtained by learning a local data processed by the node (3) based on a global model,
the output data being obtained by inputting shared data to the local model;

updating (S39) the global model based on a plurality of the information indicating the local model or a plurality of the output data received from the plurality of nodes (3); and
evaluating (S40) the updated global model based on evaluation data.

11. An information processing method comprising:

obtaining (S238) a local model learned, the local model being obtained by learning a local data based on a global model; and
evaluating (S240) the global model based on the local data, the global model being updated based on the local models of a plurality of nodes (3) or being updated based on output data of the plurality of nodes (3) each obtained by inputting shared data to the local model.

12. A carrier means carrying computer readable code for controlling a computer system to carry out the methods of any one of claims 9 to 11.

13. An information processing system (1) comprising:

the information processing apparatus (5) of claim 1; and
a plurality of nodes (3) communicably connected with the information processing apparatus (5), each of the plurality of nodes (3) including
a transmission unit (31) configured to transmit to the information processing apparatus (5) the information indicating the local model or the output data.

14. An information processing system (1) comprising:

the information processing apparatus (5) of claim 7; and
a plurality of nodes (3) communicably connected with the information processing apparatus (5), each of the plurality of nodes (3) including
a transmission unit (31) configured to transmit to the information processing apparatus (5) the information indicating the local model or the output data.

15. An information processing system (1) comprising:

an information processing apparatus (5); and
a plurality of nodes (3) communicably connected with the information processing apparatus (5), each of the plurality of nodes (3) including:

a learning processing unit (38) configured to obtain a local model, the local model being obtained by learning a local data based on a global model; and
a transmission unit (31) configured to transmit to the information processing apparatus (5), information indicating the local model or output data obtained by inputting shared data to the local model, and
the information processing apparatus (5) including:

a receiving unit (51) configured to receive the information indicating the local model or the output data from each of the plurality of nodes (3);
an update unit (52) configured to update the global model based on a plurality of the information indicating the local model or a plurality of the output data received from the plurality of nodes (3); and
a transmission unit (51) configured to transmit an updated global model to the plurality of nodes (3), and
each of the plurality of nodes (3) further including:

a receiving unit (31) configured to

**EP 4 379 610 A1**

receive the updated global model from the information processing apparatus (5); and
an evaluation unit (36) configured to evaluate the updated global model based on the local data.

# FIG. 1

<u>1</u>

# FIG. 2

3(5)

304(504) — HD

301(501) CPU
302(502) ROM
303(503) RAM
305(505) HDD
308(508) DISPLAY
310(510)

NETWORK I/F
309(509)

KEYBOARD
311(511)

MOUSE
312(512)

MEDIUM I/F
307(507)

CD-RW DRIVE
314(514)

RECORD-ING MEDIUM
306(506)

313(513)

EP 4 379 610 A1

# FIG. 3

EP 4 379 610 A1

FIG. 4

SERVER —5

GLOBAL MODEL MANAGE-MENT DB ~5001

SELECT PARTICIPATING CLIENT ~S1

SELECT GLOBAL MODEL ~S2

S3 GLOBAL MODEL

COMMUNICA-TION DEVICE ~3

LOCAL DATA MANAGE-MENT DB ~3001

S4~ SELECT LEARNING DATA

S5~ CALCULATE NUMBER OF DATA

S6~ LEARN USING LEARNING DATA

LOCAL MODEL MANAGE-MENT DB ~3002

S7 LOCAL MODEL, NUMBER OF DATA

GLOBAL MODEL MANAGE-MENT DB ~5001

UPDATE GLOBAL MODEL ~S8

CALCULATE CONTRIBUTION DEGREE ~S9

DETERMINE INCENTIVE ~S10

INCENTIVE S11

EP 4 379 610 A1

# FIG. 5

```
              ┌─────────┐
              │  START  │
              └─────────┘
                   │
                   ▼
    ┌──────────────────────────────────┐  S12
    │     ACQUIRE INITIAL GLOBAL MODEL  │
    └──────────────────────────────────┘
                   │
                   ▼
                  ( o )◄──────────────────┐
                   │                       │
                   ▼                       │
    ┌──────────────────────────────────┐  S13   │
    │    TRANSMIT GLOBAL MODEL TO CLIENT│       │
    └──────────────────────────────────┘       │
                   │                             │
                   ▼                             │
    ┌──────────────────────────────────┐  S14   │
    │  ACQUIRE LOCAL MODEL LEARNED BY   │       │
    │  CLIENT AND NUMBER OF LEARNED DATA│       │
    └──────────────────────────────────┘       │
                   │                             │
                   ▼                             │
    ┌──────────────────────────────────┐  S15   │
    │         UPDATE GLOBAL DATA        │       │
    └──────────────────────────────────┘       │
                   │                             │
                   ▼                             │
         ◇ S16                                   │
   UPDATE TERMINATION CONDITION IS ───── NO ─────┘
           SATISFIED?
                   │
                  YES
                   ▼
    ┌──────────────────────────────────┐  S17
    │CALCULATE CONTRIBUTION DEGREE OF EACH CLIENT│
    └──────────────────────────────────┘
                   │
                   ▼
    ┌──────────────────────────────────┐  S18
    │   DETERMINE INCENTIVE OF EACH CLIENT│
    └──────────────────────────────────┘
                   │
                   ▼
              ┌─────────┐
              │   END   │
              └─────────┘
```

# FIG. 6

```
        ┌─────────────┐
        │    START    │
        └─────────────┘
               │
               ▼                                      S21
┌──────────────────────────────────────────────┐
│        ACQUIRE DISTRIBUTED GLOBAL MODEL        │
└──────────────────────────────────────────────┘
               │
               ▼                                      S22
┌──────────────────────────────────────────────┐
│               ACQUIRE LOCAL DATA               │
└──────────────────────────────────────────────┘
               │
               ▼                                      S23
┌──────────────────────────────────────────────┐
│         SELECT DATA TO USE IN LEARNING BY      │
│       CLIENT AND CALCULATE NUMBER OF DATA      │
└──────────────────────────────────────────────┘
               │
               ○◄───────────────────────────┐
               │                             │
               ▼                         S24 │
┌──────────────────────────────────────────────┐
│   PERFORM LEARNING USING LEARNING DATA OF CLIENT │
└──────────────────────────────────────────────┘
               │
               ▼                   S25
          ╱ LEARNING ╲
        ╱ TERMINATION CONDITION IS SATIS- ╲    NO
        ╲         FIED?                    ╱────┘
          ╲                    ╱
               │ YES
               ▼                                      S26
┌──────────────────────────────────────────────┐
│     TRANSMIT LOCAL MODEL AFTER LEARNING        │
│     AND NUMBER OF LEARNING DATA TO CENTRAL     │
└──────────────────────────────────────────────┘
               │
               ▼
        ┌─────────────┐
        │     END     │
        └─────────────┘
```

# FIG. 7

SERVER ~5

COMMUNICA-TION DEVICE ~3

5001
GLOBAL MODEL MANAGE-MENT DB

SELECT PARTICI-PATING CLIENT ~S31

SELECT GLOBAL MODEL ~S32

5002
CENTRAL DATA MANAGE-MENT DB

SELECT EVAL-UATION DATA ~S33

S34 GLOBAL MODEL

3001
LOCAL DATA MANAGE-MENT DB

S35~ SELECT LEARNING DATA

S36~ CALCULATE NUMBER OF DATA

3002

S37~ LEARN USING LEARNING DATA

LOCAL MODEL MANAGE-MENT DB

5001
GLOBAL MODEL MANAGE-MENT DB

S38 LOCAL MODEL, NUMBER OF DATA

UPDATE GLOBAL MODEL ~S39

EVALUATE GLOBAL MODEL ~S40

EP 4 379 610 A1

# FIG. 8

SERVER —5

COMMUNICA-TION DEVICE —3

GLOBAL MODEL MANAGE-MENT DB — 5001

SELECT PARTICI-PATING CLIENT — S231

SELECT GLOBAL MODEL — S232

SELECT EVAL-UATION DATA — S233

CENTRAL DATA MANAGE-MENT DB — 5002

S234 GLOBAL MODEL

LOCAL DATA MANAGE-MENT DB — 3001

S235 — SELECT LEARNING DATA

S236 — CALCULATE NUMBER OF DATA

S237 — LEARN USING LEARNING DATA

LOCAL MODEL MANAGE-MENT DB — 3002

GLOBAL MODEL MANAGE-MENT DB — 5001

S238 LOCAL MODEL, NUMBER OF DATA

UPDATE GLOBAL MODEL — S239

EVALUATE GLOBAL MODEL — S240

CALCULATE CONTRIBUTION DEGREE — S241

DETERMINE INCENTIVE — S242

S243 INCENTIVE

EP 4 379 610 A1

# FIG. 9

START

SELECT ALL CLIENTS TO
PARTICIPATE IN FEDERATED LEARNING
~S51

PERFORM FEDERATED LEARNING WITH SELECTED
CLIENTS AND EVALUATE MODEL ACCURACY
~S52

SELECT CLIENTS TO PARTICIPATE IN FEDERATED LEARNING
EXCLUDING CLIENT TO CALCULATE CONTRIBUTION DEGREE
~S53

PERFORM FEDERATED LEARNING WITH SELECTED
CLIENTS AND EVALUATE MODEL ACCURACY
~S54

CALCULATE CONTRIBUTION DEGREE TO MODEL ACCURACY
OF CLIENT TO CALCULATE CONTRIBUTION DEGREE
~S55

CONTRIBUTION DEGREE TO
MODEL ACCURACY CALCULATED FOR ALL
CLIENTS ?
~S56

NO

YES

DETERMINE INCENTIVE FOR EACH CLIENT
~S57

END

# FIG. 10

```
                    START

                                            S61
        ACQUIRE INITIAL GLOBAL MODEL

                                            S62
           ACQUIRE CENTRAL DATA

                                            S63
   SELECT DATA TO BE USED TO EVALUATE GLOBAL MODEL

                      ◯

                                            S64
        TRANSMIT GLOBAL MODEL TO CLIENT

                                            S65
         ACQUIRE LOCAL MODEL LEARNED BY
        CLIENTS AND NUMBER OF LEARNED DATA

                                            S66
             UPDATE GLOBAL MODEL

                                            S67
     CALCULATE EVALUATION VALUE OF GLOBAL MODEL

                                            S68
            UPDATE TERMINA-
            TION CONDITION IS          NO
              SATISFIED?

                     YES

                     END
```

FIG. 11

SERVER ~5

SELECT PARTICIPATING CLIENT ~S71

5001
GLOBAL MODEL MANAGE-MENT DB

SELECT GLOBAL MODEL ~S72

S73 GLOBAL MODEL

COMMUNICA-TION DEVICE ~3

3001
LOCAL DATA MANAGE-MENT DB

S74~ SELECT LEARNING DATA

S75~ CALCULATE NUMBER OF DATA

3002
LOCAL MODEL MANAGE-MENT DB

S76~ LEARN USING LEARNING DATA

S77~ SELECT EVALUATION DATA

3001
LOCAL DATA MANAGE-MENT DB

S78~ EVALUATE GLOBAL MODEL

5001
GLOBAL MODEL MANAGE-MENT DB

S79 LOCAL MODEL, NUMBER OF DATA, EVALUATION VALUE

UPDATE GLOBAL MODEL ~S80

EVALUATE GLOBAL MODEL ~S81

EP 4 379 610 A1

# FIG. 12

SERVER — 5

GLOBAL MODEL MANAGE-MENT DB — 5001

- SELECT PARTICIPATING CLIENT — S271
- SELECT GLOBAL MODEL — S272

S273 GLOBAL MODEL →

COMMUNICA-TION DEVICE — 3

LOCAL DATA MANAGE-MENT DB — 3001

- S274 — SELECT LEARNING DATA
- S275 — CALCULATE NUMBER OF DATA
- S276 — LEARN USING LEARNING DATA

LOCAL MODEL MANAGE-MENT DB — 3002

- S277 — SELECT EVALUATION DATA

LOCAL DATA MANAGE-MENT DB — 3001

- S278 — EVALUATE GLOBAL MODEL

S279 LOCAL MODEL, NUMBER OF DATA, EVALUATION VALUE

GLOBAL MODEL MANAGE-MENT DB — 5001

- UPDATE GLOBAL MODEL — S280
- EVALUATE GLOBAL MODEL — S281
- CALCULATE CONTRIBUTION DEGREE — S282
- DETERMINE INCENTIVE — S283

S284 INCENTIVE →

EP 4 379 610 A1

# FIG. 13

```
        ┌─────────────┐
        │    START    │
        └──────┬──────┘
               │
               ▼                              S91
    ┌────────────────────────────────────┐
    │     ACQUIRE INITIAL GLOBAL MODEL    │
    └────────────────┬───────────────────┘
                     │
                     ▼
                    ◯◀─────────────────────────┐
                     │                          │
                     ▼                   S92     │
    ┌────────────────────────────────────┐      │
    │    TRANSMIT GLOBAL MODEL TO CLIENT  │      │
    └────────────────┬───────────────────┘      │
                     │                   S93      │
                     ▼                            │
    ┌────────────────────────────────────┐       │
    │     ACQUIRE LOCAL MODEL LEARNED BY  │       │
    │   CLIENTS, NUMBER OF LEARNED DATA, AND│     │
    │  GLOBAL MODEL ACCURACY EVALUATION VALUE│    │
    └────────────────┬───────────────────┘       │
                     │                   S94       │
                     ▼                             │
    ┌────────────────────────────────────┐        │
    │          UPDATE GLOBAL DATA         │        │
    └────────────────┬───────────────────┘        │
                     │                   S95        │
                     ▼                              │
    ┌────────────────────────────────────┐         │
    │  CALCULATE GLOBAL MODEL EVALUATION VALUE│     │
    └────────────────┬───────────────────┘         │
                     │              S96              │
                     ▼                               │
              ╱─────────────────────╲                │
           ╱      UPDATE               ╲         NO   │
        ╱  TERMINATION CONDITION IS SATISFIED? ────────┘
           ╲                           ╱
              ╲─────────────────────╱
                     │ YES
                     ▼
              ┌─────────────┐
              │     END     │
              └─────────────┘
```

# FIG. 14

```
        ┌─────────────┐
        │    START    │
        └─────────────┘
               │
               ▼                              S101
┌──────────────────────────────────────────────┐
│       ACQUIRE DISTRIBUTED GLOBAL MODEL         │
└──────────────────────────────────────────────┘
               │                              S102
               ▼
┌──────────────────────────────────────────────┐
│               ACQUIRE LOCAL DATA               │
└──────────────────────────────────────────────┘
               │                              S103
               ▼
┌──────────────────────────────────────────────┐
│        SELECT DATA TO USE IN LEARNING BY       │
│     CLIENTS AND CALCULATE NUMBER OF DATA        │
└──────────────────────────────────────────────┘
               │                              S104
               ▼
┌──────────────────────────────────────────────┐
│          SELECT DATA TO USE IN ACCURACY        │
│            EVALUATION OF GLOBAL MODEL           │
└──────────────────────────────────────────────┘
               │                              S105
               ▼
┌──────────────────────────────────────────────┐
│         EVALUATE GLOBAL MODEL ACCURACY         │
└──────────────────────────────────────────────┘
               │
               ▼
               ○◄──────────────────────────┐
               │                              S106
               ▼                              │
┌──────────────────────────────────────────────┐
│   PERFORM LEARNING USING LEARNING DATA OF CLIENT│
└──────────────────────────────────────────────┘
               │
               ▼                              S107
          ╱─────────────────────────╲
         ╱         LEARNING            ╲     NO
        ╱  TERMINATION CONDITION IS SATIS-╲────┘
         ╲         FIED?                 ╱
          ╲─────────────────────────╱
               │ YES
               ▼                              S108
┌──────────────────────────────────────────────┐
│    TRANSMIT LOCAL MODEL AFTER LEARNING,        │
│  NUMBER OF LEARNING DATA, AND GLOBAL MODEL     │
│   ACCURACY EVALUATION VALUE TO CENTRAL         │
└──────────────────────────────────────────────┘
               │
               ▼
        ┌─────────────┐
        │     END     │
        └─────────────┘
```

**FIG. 15**

Sequence diagram showing interactions between SERVER 5, EXTERNAL STORAGE 4, COMMUNICATION DEVICE 3, and databases GLOBAL MODEL MANAGEMENT DB 5001, LOCAL DATA MANAGEMENT DB 3001, LOCAL MODEL MANAGEMENT DB 3002.

- S111: SELECT PARTICIPATING CLIENT
- S112: SELECT GLOBAL MODEL
- S113
- S114
- S115: GLOBAL MODEL
- S116: SELECT LEARNING DATA
- S117: CALCULATE NUMBER OF DATA
- S118: LEARN USING LEARNING DATA
- S119
- S120
- S121: CALCULATE OUTPUT DATA
- S122: OUTPUT DATA, NUMBER OF DATA
- S123: UPDATE GLOBAL MODEL
- S124: CALCULATE CONTRIBUTION DEGREE
- S125: DETERMINE INCENTIVE
- S126: INCENTIVE

EP 4 379 610 A1

# FIG. 16

START

ACQUIRE INITIAL GLOBAL MODEL *S131*

SELECT MODEL TO BE USED BY EACH CLIENT *S132*

ACQUIRE SHARED DATA *S133*

TRANSMIT GLOBAL MODEL OF
SELECTED MODEL TO EACH CLIENT *S134*

ACQUIRE NUMBER OF LEARNING DATA LEARNED BY
CLIENTS AND OUTPUT DATA WHEN SHARED DATA
IS INPUT TO LOCAL MODEL AFTER LEARNING *S135*

UPDATE GLOBAL MODEL *S136*

UPDATE TERMINATION
CONDITION IS SATISFIED? *S137* — NO

YES

CALCULATE CONTRIBUTION DEGREE OF EACH CLIENT *S138*

DETERMINE INCENTIVE OF EACH CLIENT *S139*

END

# FIG. 17

```
      START

        │
        ▼                              S141
┌────────────────────────────────────┐
│   ACQUIRE DISTRIBUTED GLOBAL MODEL   │
└────────────────────────────────────┘
        │
        ▼                              S142
┌────────────────────────────────────┐
│          ACQUIRE LOCAL DATA          │
└────────────────────────────────────┘
        │
        ▼                              S143
┌────────────────────────────────────┐
│      SELECT DATA TO USE IN LEARNING BY      │
│   CLIENTS AND CALCULATE NUMBER OF DATA   │
└────────────────────────────────────┘
        │
        ◯ ◄──────────────────────────┐
        │                             │
        ▼                      S144   │
┌────────────────────────────────────┐ │
│ PERFORM LEARNING USING LEARNING DATA OF CLIENT │ │
└────────────────────────────────────┘ │
        │                             │
        ▼              S145           │
     LEARNING                         │
  TERMINATION CONDITION IS SATIS-  ───┘ NO
       FIED?
        │ YES
        ▼                      S146
┌────────────────────────────────────┐
│          ACQUIRE SHARED DATA          │
└────────────────────────────────────┘
        │
        ▼                      S147
┌────────────────────────────────────┐
│   ACQUIRE OUTPUT DATA WHEN SHARED DATA   │
│    IS INPUT TO LOCAL MODEL AFTER LEARNING   │
└────────────────────────────────────┘
        │
        ▼                      S148
┌────────────────────────────────────┐
│   TRANSMIT NUMBER OF LEARNING DATA AND   │
│    OUTPUT DATA WHEN SHARED DATA IS INPUT    │
│  TO LOCAL MODEL AFTER LEARNING TO CENTRAL   │
└────────────────────────────────────┘
        │
        ▼
       END
```

# FIG. 18

**SERVER** ~5  **EXTERNAL STORAGE** ~4  **COMMUNICATION DEVICE** ~3

5001 — **GLOBAL MODEL MANAGEMENT DB**

SELECT PARTICIPATING CLIENT ~S151

SELECT GLOBAL MODEL ~S152

S153

S155

5002 — **CENTRAL DATA MANAGEMENT DB**

SELECT EVALUATION DATA ~S155

S154

S156

GLOBAL MODEL

3001 — **LOCAL DATA MANAGEMENT DB**

S157~ SELECT LEARNING DATA

3002

S158~ CALCULATE NUMBER OF DATA

**LOCAL MODEL MANAGEMENT DB**

S159~ LEARN USING LEARNING DATA

S160

S161  S162~ CALCULATE OUTPUT DATA

5001 — **GLOBAL MODEL MANAGEMENT DB**

S163

OUTPUT DATA, NUMBER OF DATA

UPDATE GLOBAL MODEL ~S164

EVALUATE GLOBAL MODEL ~S165

EP 4 379 610 A1

FIG. 19

SERVER ~5

EXTERNAL STORAGE ~4

COMMUNICA-TION DEVICE ~3

5001
GLOBAL MODEL MANAGE-MENT DB

SELECT PARTICIPATING CLIENT ~S351

SELECT GLOBAL MODEL ~S352

S353

S354

5002
CENTRAL DATA MANAGE-MENT DB

SELECT EVALUATION DATA ~S355

S356 GLOBAL MODEL

3001
LOCAL DATA MANAGE-MENT DB

S357~ SELECT LEARNING DATA

3002

S358~ CALCULATE NUMBER OF DATA

S359~ LEARN USING LEARNING DATA

LOCAL MODEL MANAGE-MENT DB

S360

S361 S362~ CALCULATE OUTPUT DATA

5001
GLOBAL MODEL MANAGE-MENT DB

S363 OUTPUT DATA, NUMBER OF DATA

UPDATE GLOBAL MODEL ~S364

EVALUATE GLOBAL MODEL ~S365

CALCULATE CONTRIBUTION DEGREE ~S366

DETERMINE INCENTIVE ~S367

S368 INCENTIVE

EP 4 379 610 A1

# FIG. 20

SERVER ~5

EXTERNAL STORAGE ~4

COMMUNICA-TION DEVICE ~3

5001

GLOBAL MODEL MANAGE-MENT DB

SELECT PARTICIPATING CLIENT ~S171

SELECT GLOBAL MODEL ~S172

S173

S174

S175 GLOBAL MODEL

3001

LOCAL DATA MANAGE-MENT DB

S176~ SELECT LEARNING DATA

3002

S177~ CALCULATE NUMBER OF DATA

S178~ LEARN USING LEARNING DATA

LOCAL MODEL MANAGE-MENT DB

S179

S180 S181~ CALCULATE OUTPUT DATA

3001

S182~ SELECT EVALUATION DATA

LOCAL DATA MANAGE-MENT DB

S183~ EVALUATE GLOBAL MODEL

S184 OUTPUT DATA, NUMBER OF DATA, EVALUATION VALUE

5001

GLOBAL MODEL MANAGE-MENT DB

UPDATE GLOBAL MODEL ~S185

EVALUATE GLOBAL MODEL ~S186

EP 4 379 610 A1

41

# FIG. 21

```
                    ┌──────────┐         ┌──────────┐      ┌──────────────┐
                    │  SERVER  │~5       │ EXTERNAL │~4    │ COMMUNICA-   │~3
                    └──────────┘         │ STORAGE  │      │ TION DEVICE  │
                                         └──────────┘      └──────────────┘
  5001
┌──────────┐   ┌─────────────────────┐
│ GLOBAL   │   │      SELECT         │~S371
│ MODEL    │   │ PARTICIPATING CLIENT│
│ MANAGE-  │   └─────────────────────┘
│ MENT DB  │   ┌─────────────────────┐                                          3001
└──────────┘◄--│ SELECT GLOBAL MODEL │~S372
               └─────────────────────┘    S373                              ┌──────────┐
                                                                            │  LOCAL   │
                                                  S374      S375            │  DATA    │
                                                              GLOBAL MODEL  │ MANAGE-  │
                                                                            │ MENT DB  │
                                                                            └──────────┘
                                         S376~ ┌──────────────────────┐◄--┘      3002
                                               │ SELECT LEARNING DATA │
                                               └──────────────────────┘       ┌──────────┐
                                         S377~ ┌──────────────────────┐       │  LOCAL   │
                                               │CALCULATE NUMBER OF DATA│     │  MODEL   │
                                               └──────────────────────┘       │ MANAGE-  │
                                         S378~ ┌──────────────────────┐--►   │ MENT DB  │
                                               │LEARN USING LEARNING DATA│    └──────────┘
                                      S379     └──────────────────────┘
                                        S380   S381 ┌──────────────────────┐        3001
                                               │ CALCULATE OUTPUT DATA│
                                               └──────────────────────┘       ┌──────────┐
                                         S382~ ┌──────────────────────┐       │  LOCAL   │
                                               │ SELECT EVALUATION DATA│◄--   │  DATA    │
  5001                                         └──────────────────────┘       │ MANAGE-  │
┌──────────┐               S384          S383~ ┌──────────────────────┐       │ MENT DB  │
│ GLOBAL   │                                   │ EVALUATE GLOBAL MODEL│       └──────────┘
│ MODEL    │           OUTPUT DATA, NUMBER OF DATA, EVALUATION VALUE
│ MANAGE-  │   ┌─────────────────────┐
│ MENT DB  │◄--│ UPDATE GLOBAL MODEL │~S385
└──────────┘   └─────────────────────┘
               ┌─────────────────────┐
               │ EVALUATE GLOBAL MODEL│~S386
               └─────────────────────┘
               ┌─────────────────────┐
               │     CALCULATE       │~S387
               │ CONTRIBUTION DEGREE │
               └─────────────────────┘
               ┌─────────────────────┐
               │ DETERMINE INCENTIVE │~S388   S389      INCENTIVE
               └─────────────────────┘
```

EP 4 379 610 A1

Europäisches
Patentamt

European
Patent Office

Office européen
des brevets

# EUROPEAN SEARCH REPORT

Application Number

EP 23 21 2470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAO LIANG GAOLIANG GL@OUTLOOK COM ET AL: "FIFL: A Fair Incentive Mechanism for Federated Learning", THE 2021 7TH INTERNATIONAL CONFERENCE ON INDUSTRIAL AND BUSINESS ENGINEERING, ACMPUB27, NEW YORK, NY, USA, 9 August 2021 (2021-08-09), pages 1-10, XP058864438, DOI: 10.1145/3472456.3472469 ISBN: 978-1-4503-9799-5 * figures 1, 8 * * section 5.1, line 1 * * section 3.2, line 17 * * section 3.2, lines 20-21 * * section 3.2, lines 26-29 * * section 3.1 * * section 4.3 * * equations (14)-(15), (19) * * section 4.5, lines 6-8 * * section 4.1, lines 19-22 * * section 4.4, lines 1-2 * * section 5.1, lines 24-27 * ----- | 1-15 | INV. G06N3/098 |
| X | SHI ZHUAN ET AL: "FedFAIM: A Model Performance-based Fair Incentive Mechanism for Federated Learning", IEEE TRANSACTIONS ON BIG DATA, 16 June 2022 (2022-06-16), pages 1-13, XP093147097, ISSN: 2372-2096, DOI: 10.1109/TBDATA.2022.3183614 Retrieved from the Internet: URL:https://ieeexplore.ieee.org/stampPDF/g etPDF.jsp?tp=&arnumber=9797864&ref=aHR0cHM 6Ly9pZWVleHBsb3JlLmllZWUub3JnL2RvY3VtZW50L zk3OTc4NjQ=> * abstract; figure 1; table 1 * * algorithms 1-2 * * section 4 * ----- | 1-15 | TECHNICAL FIELDS SEARCHED (IPC) G06N |

The present search report has been drawn up for all claims

| Place of search | Date of completion of the search | Examiner |
|---|---|---|
| The Hague | 4 April 2024 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019146358 A

**Non-patent literature cited in the description**

- **BRENDAN MCMAHAN ; EIDER MOORE ; DANIEL RAMAGE ; SETH HAMPSON ; BLAISE AGUERA ; AREAS.** Communication-Efficient Learning of Deep Networks from Decentralized Data. *Proceedings of the 20th International Conference on Artificial Intelligence and Statistics PMLR,* 2017, vol. 54, 1273-1282

- **TIAN LI ; ANIT KUMAR SAHU ; MANZIL ZAHEER ; MAZIAR SANJABI ; AMEET TALWALKAR ; VIRGINIA SMITH.** Federated Optimization in Heterogeneous Networks. *In Proceedings of Machine Learning and Systems,* 2020, vol. 2, 429-450
- **TZU-MING HARRY HSU ; HANG QI ; MATTHEW BROWN.** Measuring the Effects of Non-Identical Data Distribution for Federated Visual Classification. *arxiv preprint arxiv: 1909. 06335,* 2019